# EUROPEAN PATENT APPLICATION

(11) **EP 4 668 730 A1**
(43) Date of publication of application: **24.12.2025**
(21) Application number: 25182904.0
(22) Date of filing: 16.06.2025
(51) Int. Cl.: H04N 9/31, G02B 26/08, G03B 21/00, G03B 21/14, G03B 21/46, G03B 21/53

(54) **SINGLE COMPONENT CONVERGENCE MECHANISM FOR A LIGHT MODULATOR OF A PROJECTOR**

(30) Priority: 17.06.2024 US 202463660637 P; 05.07.2024 US 202463667904 P
(71) Applicant: Christie Digital Systems USA, Inc., Cypress, CA 90630 (US)
(72) Inventor: TESCHKE, Dustin, Kitchener, N2N 1M1 (CA); MARIC, Jaksa, Waterloo, N2K 3W5 (CA); CIORANIC, Mihai, Cambridge, N3H 5C3 (CA)
(74) Representative: Studio Torta S.p.A.

(57) **Abstract**

A single component convergence mechanism for a light modulator of a projector is provided. The single component convergence mechanism includes: a plate; a light-modulator-mounting position at the plate; a pair of slot spring mechanisms in the plate, the pair of slot spring mechanisms on opposite sides of the light-modulator-mounting position; and a pair of connecting slots (1116) in the plate joining the pair of slot spring mechanisms. A region formed by the pair of slot spring mechanisms and the pair of connecting slots (1116) is laterally displaceable within the plate via force applied to on a spring mechanism of the pair of slot spring mechanisms, the light-modulator-mounting position located at the region. The pair of slot spring mechanisms are connected to the region to a remainder of the plate.

## Description

### CROSS-REFERENCE TO RELATED APPLICATIONS

The present specification claims priority from United States Provisional Patent Application Number 63/660637, filed on June 17, 2024, and from United States Provisional Patent Application Number 63/667904 filed on July 5, 2024, both of which are incorporated herein by reference.

### FIELD

The specification relates generally to projectors, and specifically to a single component convergence mechanism for a light engine of a projector.

### BACKGROUND

Three chip digital micromirror (DMD) light engines include one DMD for each of red, green and blue channels of light. Such three chip DMD light engines require precision pixel alignment between the three channels so that pixels of respective images formed by the three DMDs converge and/or align, for example at a screen onto which the respective images are projected by a projector into which a three chip DMD light engine is incorporated. Various iterations of mechanical convergence adjustment mechanisms have been implemented on various different light engine designs in the past. While these mechanisms satisfied a primary need for fine X-Y optical adjustment of the DMD positions, they inherently had a number of undesirable consequences.

For example, such mechanisms are typically made up of multiple moving components, incorporating springs, adjustment locks, and precision alignment components. Some also provide electronics convergence, where sub-pixel dithering is used to mask misalignments.

Such traditional convergence mechanisms are quite mechanically complex, take up valuable space on printed circuit boards (PCBs) of the light engines, are relatively expensive, and are often susceptible to drifting out of alignment when subject to various environmental conditions. Another drawback to traditional convergence mechanisms is that, by design, they provide a range of adjustment much larger than what is actually required. Excess adjustment often resulted in users or environmental factors inducing very large misalignments that later require more effort to re-align.

While electronic convergence may be used, such non-mechanical electronic convergence tends to soften images to obscure sub-pixel misalignment, thereby compromising (e.g. reducing), image quality.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts an example of a single component convergence mechanisms, according to non-limiting examples.
FIG. 2 depicts details of a Region A of the single component convergence mechanism of FIG. 1, according to non-limiting examples.
FIG. 3 depicts details of a Region B of the single component convergence mechanism of FIG. 1, according to non-limiting examples.
FIG. 4 depicts another example of a single component convergence mechanism, according to non-limiting examples.
FIG. 5 depicts details of a Region C of the single component convergence mechanism of FIG. 4, and more specifically operation of a Y-axis adjustment, according to non-limiting examples.
FIG. 6 depicts a schematic view of the Y-axis adjustment of FIG. 5, according to non-limiting examples.
FIG. 7 depicts further details of the Region C of the single component convergence mechanism of FIG. 4, and more specifically operation of an X-axis adjustment, according to non-limiting examples.
FIG. 8 depicts a schematic view of the X-axis adjustment of FIG. 7, according to non-limiting examples.
FIG. 9 depicts the single component convergence mechanism FIG. 4, where portions of regions where adjustment mechanisms are located are removed to show positions of adjustment screws of the adjustment mechanisms, according to non-limiting examples.
FIG. 10 depicts another example of a single component convergence mechanism, that is similar to the single component convergence mechanism of FIG. 4, but adapted to include a rotational adjustment mechanism, according to non-limiting examples.
FIG. 11 depicts another example of a single component convergence mechanism, according to non-limiting examples.
FIG. 12 depicts the single component convergence mechanism FIG. 11, where portions of regions where adjustment mechanisms are located are removed to show positions of adjustment screws of the adjustment mechanisms, according to non-limiting examples.
FIG. 13 depicts details of a rotational area of the single component convergence mechanism of FIG. 11, and more specifically operation of a rotational adjustment, according to non-limiting examples.
FIG. 14 depicts a schematic view of the rotational adjustment of FIG. 13, according to non-limiting examples.

### DETAILED DESCRIPTION

Provided herein is a single component convergence mechanism that comprises an at least partially laterally deformable plate (e.g. which may be fixed to a frame of a light engine incorporated into projector, and the like), which is at least partially laterally deformable in two perpendicular directions through the tightening (or loosening) of adjustment screws, which may exert pressure and/or force on lateral spring mechanisms in a plane of the plate (e.g., integrated in the plate and formed by slots therethrough), causing the spring mechanisms to deform in the plane of the plate, thereby moving and/or displacing a region (e.g., a laterally displaceable region) of the plate, inside slots that join the spring mechanisms. In some examples, the pressure and/or force applied may be via a push action of an adjustment screw, whereas in other examples, the pressure and/or force applied may be via a pull action of the adjustment screw; indeed, in some examples, the pressure and/or force applied may be via a push action or a pull action of the adjustment screw, depending on a direction in which the adjustment screw is adjusted. The spring mechanisms may be formed by slots in the plate, and a pair of such spring mechanisms (e.g., on opposite sides of the plate) may be joined by respective connecting slots, for example along a given movement direction, to enable the displaceable region of the plate, within the connecting slots and the pair of spring mechanisms, to move along the given movement direction. The slots of spring mechanisms and the connecting slots are provided in a manner such that the displaceable region of the plate within the connecting slots and the pair of spring mechanisms is connected to the remainder of the plate via the spring mechanisms.

Indeed, as used herein, the term "slot" is understood to refer to an elongated hole and/or opening and/or aperture and/or cutout through a plane of material (e.g., for example metal).

A light modulator, such as a DMD, may be attached and/or mounted to the plate at a light-modulator position located at the displaceable region and the spring mechanisms may be deformed using the adjustment screws to independently move and/or displace the laterally displaceable region, and hence the light modulator, in one, or both, of the two perpendicular directions. The displacing of the laterally displaceable region provides positional adjustment to the light modulator so that a respective image, formed by light that is modulated by the light modulator, converges and/or aligns with respective images formed by other light modulators of a light engine into which the light modulator and the single component convergence mechanism is incorporated.

The plate may be deformable enough, at least at the spring mechanisms, to make adjustments in a range of +/- 2 pixels to +/-4 pixels (e.g. of the light modulator). This may be sufficient to accommodate for manufacturing variability and thermal drift, but is not excessive, so that drift of a position of a light modulator mounted to the plate is minimal after alignment. In many cases, the pixels of a light modulator mounted to the plate, under standard thermal conditions of a light engine and/or projector into which the single component convergence mechanism is incorporated, may be aligned to a level that is acceptable, for example in an initial adjustment, and without any further adjustment because the provided single component convergence mechanism may provide a strong, mechanically stable nominal alignment position. While terms such as "acceptable" are understood to be relative, the term "acceptable" is understood to have a technical meaning: in particular "acceptable" alignment may be understood to mean that corresponding pixels of images projected onto a screen are aligned to within a given threshold, such as within 1%, within 2%, with 5%, and the like. Regardless, it is understood that single component convergence mechanisms provided herein may provide such acceptable alignment.

The use of a single plate to implement the provided single component convergence mechanism, that provides adjustment in two perpendicular directions, generally reduces a number of adjustment components relative to more complex prior art convergence mechanisms, as well as relatively reduces time for assembly thereof, and may further relatively reduce complexity in performing such adjustments (e.g. as well as reducing labor to perform such adjustments). This may hence, overall, result in a cost reduced implementation of a convergence mechanism in three light modulator light engines (e.g. three DMD light engines). Also, the simplicity of the provided single component convergence mechanism may reduce defects in a manufacturing or assembly processes thereof. Indeed, the provided single component convergence mechanism has no moving parts, apart from the aforementioned alignment screws, and hence is relatively robust, and resistant to drifting out of alignment.

Furthermore, while present examples of convergence mechanisms show two groups of nested spring mechanisms, and associated connecting slots (e.g., for adjustment in two perpendicular "in-plane" directions and/or XY directions), convergence mechanisms provided herein may include as few as one set of spring mechanisms, and associated connecting slots (e.g., for adjustment in one "in-plane" direction, such as the X direction or Y direction).

Furthermore, present examples of convergence mechanisms may be provided with a rotational adjustment mechanism to rotate the laterally displaceable region within a plane of the plate, providing yet another degree of freedom for adjusting a light modulator attached thereto.

An aspect of the present specification provides a device comprising: a plate; a light-modulator-mounting position at the plate; a pair of slot spring mechanisms in the plate, the pair of slot spring mechanisms on opposite sides of the light-modulator-mounting position; a pair of connecting slots (1116) in the plate joining the pair of slot spring mechanisms; and a region formed by the pair of slot spring mechanisms and the pair of connecting slots (1116) that is laterally displaceable within the plate via force applied to a spring mechanism of the pair of slot spring mechanisms, the light-modulator-mounting position located at the region, the pair of slot spring mechanisms connected to the region to a remainder of the plate.

At the device, respective parallel portions of the pair of connecting slots (1116) may be about parallel to a movement direction of the region.

At the device, connecting portions of the pair of connecting slots (1116) may connect respective parallel portions to the pair of slot spring mechanisms.

At the device, the pair of slot spring mechanisms may respectively comprise: an outer slot; and an inner slot, wherein outer slots of the pair of slot spring mechanisms are joined via a first connecting slot of the pair of connecting slots (1116), and inner slots of the pair of slot spring mechanisms are joined via a second connecting slot of the pair of connecting slots (1116). The pair of slot spring mechanisms may be connected to the region at first respective ends, and the pair of slot spring mechanisms may be connected to the remainder of the plate at second respective ends opposite the first respective ends.

At the device, the pair of slot spring mechanisms may respectively comprise an outer slot and an inner slot, wherein a distance between the outer slot and the inner slot may be greater at respective center portions than at respective end portions. Each of the outer slot and the inner slot may comprise respective joining portions joining the respective center portions to the respective center portions.

The device may further comprise: a first slot group comprising the pair of slot spring mechanisms and the pair of connecting slots (1116); and a second slot group nested inside the first slot group, the second slot group rotated by 90° relative to the first slot group, and the second slot group may comprise: a second pair of slot spring mechanisms on respective opposite sides of the light-modulator-mounting position; and a second pair of connecting slots (1116) in the plate joining the second pair of slot spring mechanisms, the second pair of slot spring mechanisms connected, at respective second inner sides, to the region, and connected, at second respective outer sides, to a respective remainder of the plate, wherein the region is within both the first slot group and the second slot group, wherein the region is laterally displaceable within the plate in a first direction via force applied to the spring mechanism of the pair of slot spring mechanisms, and the region is laterally displaceable within the plate in a second direction perpendicular to the first direction, via respective force applied to a respective spring mechanism of the second pair of slot spring mechanisms.

At the device, the pair of slot spring mechanisms may be biased to a rest position.

The device may further comprise: an adjustment mechanism configured to move, or apply force to, one slot spring mechanism, of the pair of slot spring mechanisms, to laterally displace the region within the plate in a movement direction. The adjustment mechanism may comprise a threaded adjustment screw, wherein an end of the threaded adjustment screw may be mated to the region, adjacent the one slot spring mechanism, of the pair of slot spring mechanisms, via one or more pins, such that the one slot spring mechanism, of the pair of slot spring mechanisms is movable via push or pull movement via the end of the threaded adjustment screw.

The device may further comprise: a rotatable area comprising one or more slots nested inside the pair of slot spring mechanisms and the pair of slot spring mechanisms, the region comprising the rotatable area, and the light-modulator-mounting position being inside the rotatable area; and a threaded adjustment screw, wherein an end of the threaded adjustment screw is positioned off-center from the rotatable area, the end of the threaded adjustment screw configured to rotate the rotatable area when the threaded adjustment screw is turned. The end of the threaded adjustment screw may be mated to the rotatable area via one or more pins, such that the rotatable area is rotatable via push or pull movement via the end of the threaded adjustment screw.

At the device, the plate may comprise regions of reduced cross-sectional area located at locations joining the slot spring mechanisms and the pair of connecting slots.

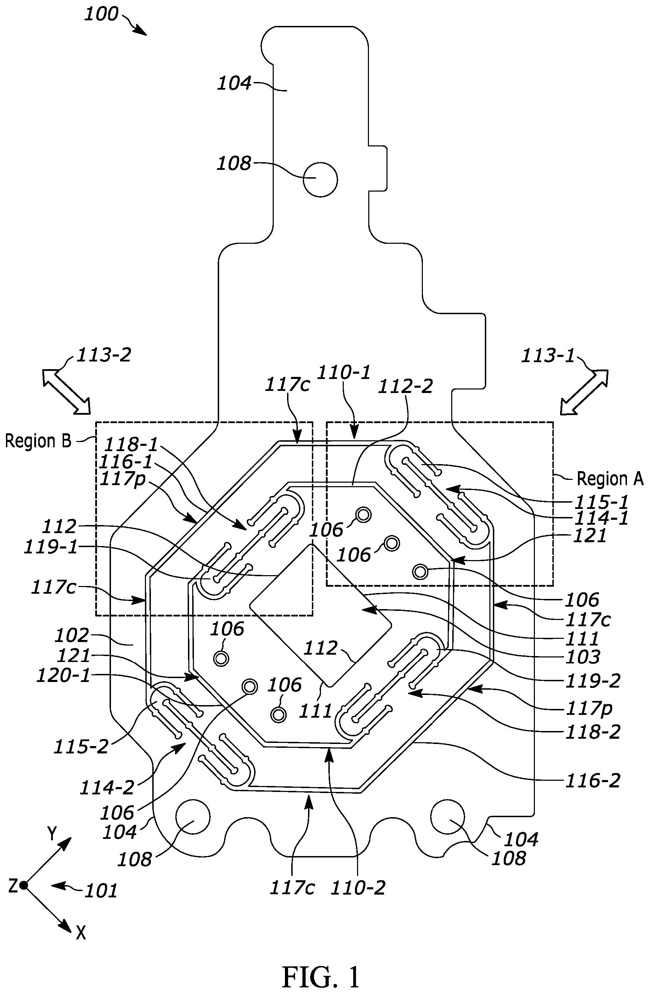

With reference to FIG. 1, a single component convergence mechanism 100 is provided that obviates problems with prior art convergence mechanisms for light engines, for example by excluding sliding mechanisms with multiple moving components, and the like.

For reference, an XYZ coordinate system 101 is also depicted. While the terms "X", "Y" and "Z" are used herein for reference to adjustments in particular directions that are orthogonal and/or perpendicular to each other, such terms are understood to be not particularly limiting. An XY plane of the coordinate system 101 is understood to be within a plane of the pages of present figures, whereas a Z axis is understood to be perpendicular to the XY plane and/or the plane of the pages of present figures.

The single component convergence mechanism 100 includes an at least partially laterally deformable plate 102 (e.g. in at least some regions, as described herein) that may provide robust mechanical X-Y adjustment of a light-modulator-mounting position 103. As depicted, the laterally deformable plate 102 includes arms 104 extending therefrom that may be used to mount the plate 102 to a light engine, and the like, as well as apertures 106, 108 to assist in such mounting and/or for mounting a light modulator to the plate 102.

In particular, a light modulator (not depicted), such as a DMD, may be mounted to the plate 102 at the light-modulator-mounting position 103 via any suitable attachment mechanism, which may utilize the depicted light modulator mounting apertures 106 through the plate 102. For example screws, bolts, and the like may be threaded through the light modulator mounting apertures 106, and complimentary apertures of the light modulator, to attach a light modulator to the plate 102. However, a light modulator may be attached to the plate 102 in any suitable manner, but with an orientation as described herein.

Similarly, the plate 102 may be mounted to a frame (not depicted) of a light engine (e.g. a projector) via any suitable attachment mechanism, which may utilize the depicted frame mounting apertures 108 through the plate 102. For example screws, bolts, and the like may be threaded through the frame mounting apertures 108, and complimentary apertures of a frame of a light engine, to attach the plate 102 to the frame. However, the plate 102 may be attached to a frame of a light engine in any suitable manner.

Such a light engine may in turn be a component of a projector. Furthermore, such a light engine may include three single component convergence mechanisms 100, one for each of red, green and blue channels. Furthermore, while light modulators as described herein may include DMDs, any suitable light modulators are within the scope of the present specification, including, but not limited to, liquid crystal on silicon (LCOS) light modulators, and the like.

As is next described, a position of a light modulator mounted at the light-modulator-mounting position 103 may be adjusted, relative to the frame of the light engine, and/or relative to other light modulators of the light engine, via various spring mechanisms, formed by various slots in the plate 102, to which pressure and/or force may be applied, for example laterally and/or in a plane of the plate 102.

As depicted, the plate 102 may include two groups 110-1, 110-2 of slots through the plate 102, (e.g. collectively referred to as the groups 110 and/or the slot groups 110 and, generically, as a group 110 and/or a slot group 110). Each slot group 110 is dedicated to displacing respective regions of the plate 102 within the groups 110, in particular laterally in respective perpendicular directions, which may correspond to X and Y movement directions of a light modulator mounted at the light-modulator-mounting position 103.

As such, it is understood that any mechanism used to attach a light modulator to the plate 102 generally attaches the light modulator at the light-modulator-mounting position 103, with respective edges thereof being perpendicular to directions of movement. For example, assuming edges 111, 112 of a depicted rectangular aperture of the light-modulator-mounting position 103 represents locations of respective edges of a light modulator mounted to the plate 102, a first slot group 110-1 is understood to be dedicated to moving the edges 111 in a first movement direction 113-1 (e.g. a Y direction) perpendicular to the edges 111, and a second slot group 110-2 is understood to be dedicated to moving the edges 112 in a second movement direction 113-2 (e.g. an X direction) perpendicular to the edges 112. The first movement direction 113-1 and the second movement direction 113-2 (e.g. movement directions 113 and/or a movement direction 113) are understood to be perpendicular to each other.

Furthermore, the second slot group 110-2 is understood to be located inside, and/or nested inside, the first slot group 110-1 so that movement of the light modulator in the first movement direction 113-1 and the second movement direction 113-2 may be performed independent of each other.

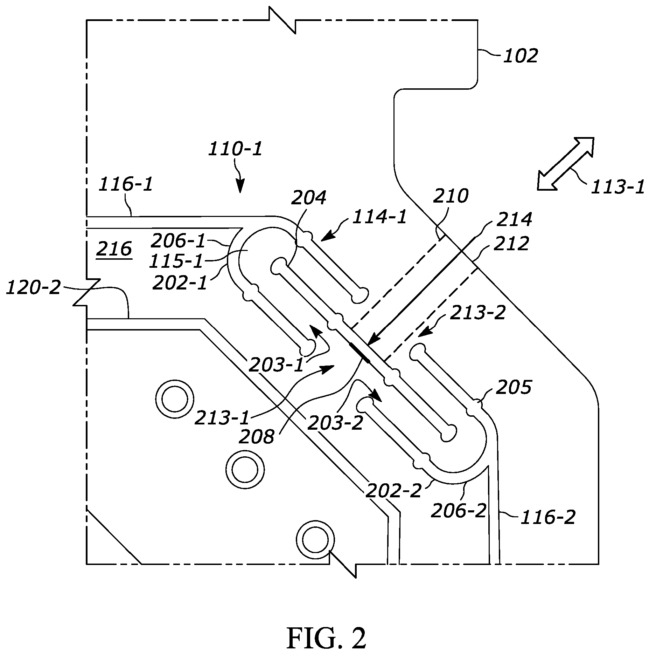

The first slot group 110-1 is now described with reference to FIG. 1 and FIG. 2, with FIG. 2 showing detail of a Region "A" of FIG. 1, that includes a portion of the first slot group 110-1.

In particular, the first group 110-1 includes two slot spring mechanisms 114-1, 114-2 (e.g. slot spring mechanisms 114 and/or a slot spring mechanism 114) that are symmetrically located opposite each other at the plate 102, on either side of the light-modulator-mounting position 103. The slot spring mechanisms 114-1, 114-2 generally form respective spring mechanisms 115-1, 115-2 (e.g. spring mechanisms 115 and/or a spring mechanism 115) that are also symmetrically located opposite each other at the plate 102, on either side of the light-modulator-mounting position 103. The slot spring mechanisms 114 and/or the spring mechanism 115, are connected to each other via respective connecting slots 116-1, 116-2 (e.g. connecting slots 116 and/or a connecting slot 116) that are symmetrical to each other relative to the first movement direction 113-1, such that, when the opposite slot spring mechanisms 114 and/or the opposite spring mechanism 115 are deformed laterally in a plane of the plate 102, a region of the plate 102 contained within the connecting slots 116 moves in the first movement direction 113-1. The connecting slots 116 are generally around the second slot group 110-2.

In some examples, as depicted, at least a portion (e.g., parallel portions 117p) of the respective connecting slots 116 may be parallel and/or about parallel to the first movement direction 113-1 such that, when the slot spring mechanisms 114 are compressed or expanded in the first movement direction 113-1, a region of the plate 102 contained within the connecting slots 116 moves in the first movement direction 113-1 relative to a remainder of the plate 102 outside the connection slots 116. Further, any remaining portions of the respective connecting slots 116 (e.g., connecting portions 117c) that are not parallel to the first movement direction 113-1, may have a width or widths that allows the region of the plate 102 contained within the connecting slots 116 to move a given distance along the first movement direction 113-1, for example to displace a light modulator at light-modulator-mounting position 103 to move the given distance. Indeed, at extreme displacements, the region of the plate 102 contained within the connecting slots 116 may touch a remainder of the plate 102 outside the connection slots 116. The connecting portions are understood to connect respective parallel portions 117p to the pair of slot spring mechanisms 114. Furthermore, the connecting portions 117c may be smaller or large than depicted, with a geometry of the parallel portions 117p adjusted accordingly.

Similarly, the second slot group 110-2 includes two slot spring mechanisms 118-2, 118-2 (e.g. slot spring mechanisms 118 and/or a slot spring mechanism 118) that are symmetrically located opposite each other at the plate 102, on either side of the light-modulator-mounting position 103. The slot spring mechanisms 118-1, 118-2 generally form respective spring mechanisms 119-1, 119-2 (e.g. spring mechanisms 119 and/or a spring mechanism 119) that are also symmetrically located opposite each other at the plate 102, on either side of the light-modulator-mounting position 103. The slot spring mechanisms 118 are connected to each other via respective connecting slots 120-1, 120-2 (e.g. connecting slots 120 and/or a connecting slot 120) that are symmetrical to each other relative to the second movement direction 113-2, such that, when the opposite slot spring mechanisms 118 and/or the opposite spring mechanism 119 are deformed laterally in a plane of the plate 102, a region of the plate 102 contained within the connecting slots 120 moves in the second movement direction 113-2.

While not labelled for simplicity, and similar to the connecting slots 116, in some examples, as depicted, at least a portion 121 of the respective connecting slots 120 may be parallel and/or about parallel to the second movement direction 113-2 such that, when the slot spring mechanisms 114 are compressed or expanded in the second movement direction 113-2, a region of the plate 102 contained within the connecting slots 120 moves in the second movement direction 113-2 relative to a remainder of the plate 102 outside the connection slots 118. Further, any remaining portion of the respective connecting slots 120 that are not parallel to the second movement direction 113-2, may have a width or widths that allows the region of the plate 102 contained within the connecting slots 120 to move a given distance along the second movement direction 113-2, for example to displace a light modulator at light-modulator-mounting position 103 to move the given distance. Indeed, at extreme displacements, the region of the plate 102 contained within the connecting slots 120 may touch a remainder of the plate 102 outside the connection slots 118.

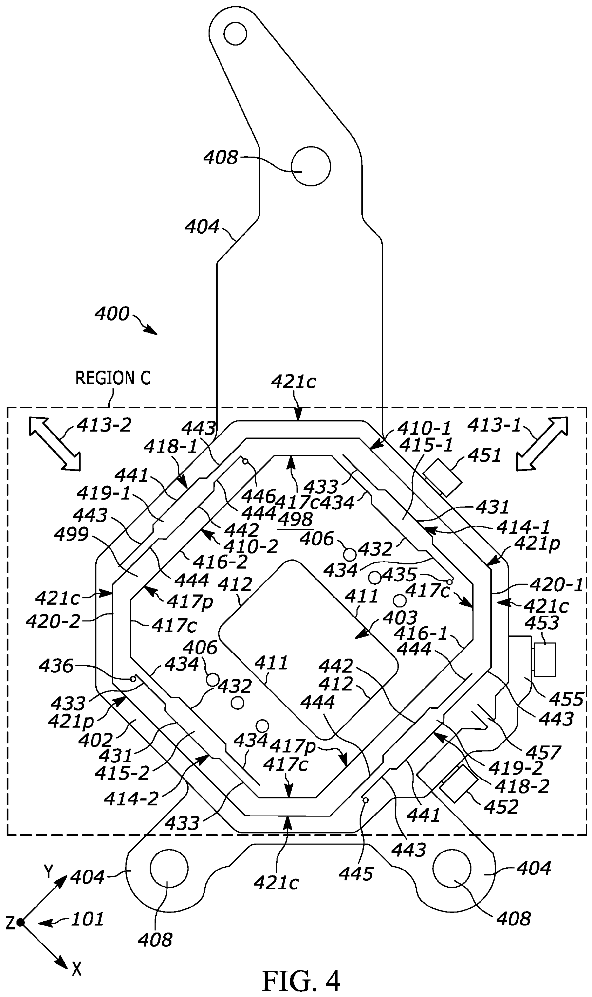

The slot spring mechanisms 114, 118 will be described in further detail herein, but in general may comprise slots arranged to manage elastic plate deformations under stress conditions (e.g. such as lateral stress conditions), and geometries and/or widths of such slots may vary. Furthermore, it is understood that variable width of slots of the slot spring mechanisms 114, 118 may refer to specific widths of the slots varying along the length of the slots and/or the arrangement of the slots relative to each other varying along their respective lengths. For example, as will be next described, the slot spring mechanisms 114, 118 comprise respective arrangements of slots that form respective spring mechanisms 115, 119 that may be compressed, or may be expanded, along respective movement directions 113, and may further be biased to a rest position. Furthermore, while specific arrangements of slots are described herein, any suitable arrangement of slots that form respective spring mechanisms 115, 119 that may be compressed, or may be expanded, along respective movement directions 113, and may further be biased to a rest position, are within the scope of the present specification. For example an alternative arrangement of slots forming (e.g., lateral) spring mechanisms is described with respect to FIG. 4.

Attention is next directed to FIG. 2, which depicts detail of a first slot spring mechanism 114-1 connected to the connecting slots 116. In particular, the first slot spring mechanism 114-1 comprises two U-shaped slots 202-1, 202-2 (e.g. U-shaped slots 202 and/or a U-shaped slot 202), having respective openings 203-1, 203-2 (e.g., openings 203, and/or an opening 203) that face each other, and contain, between the U-shaped slots 202, an inner slot 204 which is perpendicular to the first movement direction 113-1. Indeed, the openings 203 are understood to comprise the open ends of the U-shaped slots 202. The inner slot 204 is furthermore arranged symmetrical relative to the U-shaped slots 202.

Outer ends (e.g., respective closed ends) of the U-shaped slots 202 are connected to respective connecting slots 116. In particular, an outer rounded region of the first U-shaped slot 202-1 is connected to the first connecting slot 116-1, and an outer rounded region of the second U-shaped slot 202-2 is connected to the second connecting slot 116-2. However, the connecting slots 116 may be joined to the first slot spring mechanism 114-1 in any suitable manner, and similarly joined, at opposite ends, to the second slot spring mechanism 114-2. For example, the U-shaped slots 202-1, 202-2 respectively comprise closed ends 206-1, 206-2 (e.g., ends 206 and/or an end 206) opposite the respective openings 203-1, 203-2, and the connecting slots 116 may be joined to the slot spring mechanisms 114 via the ends 206 of the U-shaped slots 202 (e.g., at, or adjacent the ends 206).

Furthermore, as depicted in FIG. 2, the U-shaped slots 202 and the inner slot 204 include wider rounded regions, including at openings 203, thereof, to vary the width of the U-shaped slots 202 and the inner slot 204, which may assist in elastic deformation of the first slot spring mechanism 114-1 and/or the first spring mechanism 115-1. For clarity, only one rounded region 205 is indicated in the second U-shaped slot 202-2. Furthermore, such rounded regions 205 are understood to be symmetrically arranged relative to the first movement direction 113-1. Distortion of the various spring mechanisms 115, 119 described herein may occur at the rounded regions 205.

The U-shaped slots 202 and the inner slot 204 are understood to be symmetrically shaped relative to the first movement direction 113-1, for example to better facilitate movement, of a light modulator located at the light-modulator-mounting position 103, along the first movement direction 113-1.

The combination of the U-shaped slots 202 and the inner slot 204 forms the first spring mechanism 115-1 in the plate 102 that may be deformed and/or expanded along the first movement direction 113-1, for example towards the opposite second slot spring mechanism 114-2, by exerting pressure and/or force along an inner edge 208 of the inner slot 204. A portion of the inner edge 208 is exaggerated to indicate a position thereof. Furthermore, the portion on the inner edge 208 is understood to be at a center of the inner slot 204.

Prior to discussing how the plate 102 is deformed (e.g. the slot spring mechanisms 114 and/or the spring mechanisms 115), it is understood that the second slot spring mechanism 114-2 has a structure similar to the first slot spring mechanism 114-1, includes the respective second spring mechanism 115-2 formed by respective slots, and is symmetrically located along the first movement direction 113-1.

Both the spring mechanisms 115, as depicted, hence comprise a race-track shaped region formed by respective U-shaped slots 202 at outer ends thereof, and further comprise respective inner slots 204 that are symmetrically arranged within the spring mechanisms 115. However, the spring mechanisms 115 further join a respective region 216 of the plate 102, located inside the connecting slots 116 (e.g. and the respective slot spring mechanisms 114), to a remainder of the plate 102 located outside the connecting slots 116 (e.g. and the respective slot spring mechanisms 114). Put another way, the pair of spring mechanisms 115 are connected at respective inner sides 213-1 to the region 216, and connected at respective outer sides 213-2 to a remainder of the plate 102, outside of the region 216 and extending around the region 216.

Furthermore, the spring mechanisms 115 are understood to be biased to a rest position, as depicted, and the spring mechanisms 115 may be expanded or compressed from the rest position to respective expanded positions or respective compressed positions by applying pressure and/or force to the spring mechanisms 115 as is next explained.

Returning to how the plate 102 is deformed, the plate 102 may include a threaded hole 210 (e.g. represented by parallel broken lines) from an edge 212 thereof, to the inner slot 204 that is along the first movement direction 113-1, through which an adjustment screw may be threaded, such that an end of the adjustment screw is located at the inner edge 208. Such a hole 210 may extend from the edge 212 through the outer side 213-2 of the first spring mechanism 115-1, and through to the inner slot 204, extending into the inner slot 204 to the portion on the inner edge 208of the inner slot 204.

When the adjustment screw is adjusted to exert pressure and/or force 214 on the portion on the inner edge 208, the first spring mechanism 115-1 deforms from a rest position, for example widening the inner slot 204, and a region 216 of the plate 102 located inside the first slot group 110-1 moves towards the second slot spring mechanism 114-2, and the second spring mechanism 115-2 thereof is correspondingly compressed from a respective rest position, thereby moving a light modulator at the light-modulator-mounting position 103 along the first movement direction 113-1, for example towards the second slot spring mechanism 114-2.

Conversely, when the adjustment screw is adjusted to release pressure and/or force 214 on the portion on the inner edge 208, the first spring mechanism 115-1 relaxes towards the rest position (e.g. due the first spring mechanism 115-1 being biased towards the rest position), for example returning the inner slot 204 towards its initial width, and the region 216 of the plate 102 located inside the first slot group 110-1 moves away from the second slot spring mechanism 114-2, and the second spring mechanism 115-2 is correspondingly relaxed towards the respective rest position (e.g. due the second spring mechanism 115-2 being biased towards the respective rest position), thereby moving a light modulator at the light-modulator-mounting position 103 along the first movement direction 113-1, for example away from the second slot spring mechanism 114-2.

In some optional examples, the threaded adjustment screw may be attached to the inner edge 208 using any suitable mechanism, such that the inner edge 208 may be pulled away from the second slot spring mechanism 114-2 along the first movement direction 113-1, compressing the first spring mechanism 115-1 and the inner slot 204, and expanding the second spring mechanism 115-2.

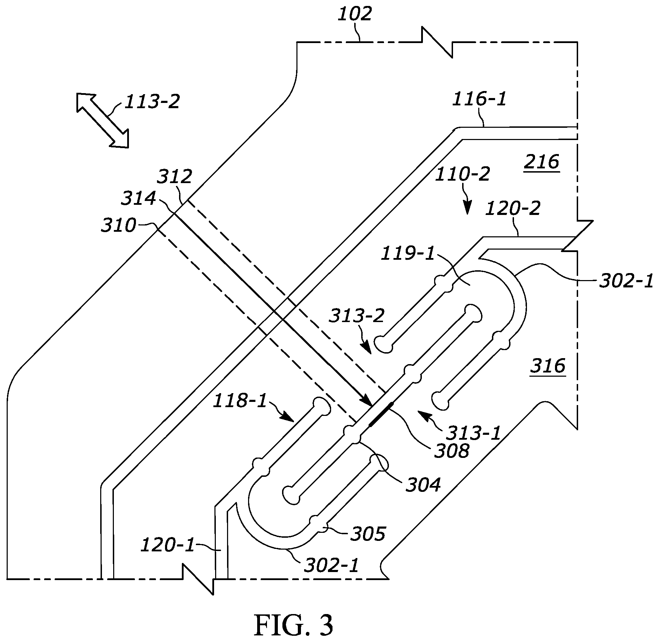

Attention is next directed to FIG. 3, which depicts detail of a first slot spring mechanism 118-1 connected to the connecting slots 120 of the inner slot group 110-2. In particular, the first slot spring mechanism 118-1 comprises two U-shaped slots 302-1, 302-2 (e.g. U-shaped slots 302 and/or a U-shaped slot 302), which face each other, and contain, between the U-shaped slots 302, an inner slot 304 which is perpendicular to the second movement direction 113-2. The inner slot 304 is furthermore arranged symmetrical relative the U-shaped slots 302.

Outer ends of the U-shaped slots 302 are connected to respective connecting slots 120. In particular, an outer rounded region of the first U-shaped slot 302-1 is connected to the first connecting slot 120-1, and an outer rounded region of the second U-shaped slot 302-2 is connected to the second connecting slot 120-2. However, the connecting slots 120 may be joined to the first slot spring mechanism 118-1 in any suitable manner, and similarly joined, at opposite ends, to the second slot spring mechanism 118-2.

Furthermore, as depicted in FIG. 3, the U-shaped slots 302 and the inner slot 304 include wider rounded regions, including at ends thereof, to vary the width of the U-shaped slots 302 and the inner slot 304, which may assist in elastic deformation of the first slot spring mechanism 118-1 and/or the first spring mechanism 119-1. For clarity, only one rounded region 305 is indicated in the second U-shaped slot 302-2. Furthermore, such rounded regions 305 are understood to be symmetrically arranged relative to the second movement direction 113-2.

The U-shaped slots 302 and the inner slot 304 are understood to be symmetrically shaped relative to the second movement direction 113-2, for example to better facilitate movement, of a light modulator located at the light-modulator-mounting position 103, along the second movement direction 113-2.

The combination of the U-shaped slots 302 and the inner slot 304 forms the first spring mechanism 119-1 in the plate 102 that may be deformed and/or expanded along the second movement direction 113-2, for example towards the opposite second slot spring mechanism 118-2, by exerting pressure and/or force along an inner edge 308 of the inner slot 304. A portion of the inner edge 308 is exaggerated to indicate a position thereof. Furthermore, the portion on the inner edge 308 is understood to be at a center of the inner slot 304.

Prior to discussing how the plate 102 (e.g. the slot spring mechanisms 118 and/or the spring mechanisms 119) is deformed, it is understood that the second slot spring mechanism 118-2 has a structure similar to the first slot spring mechanism 118-1, and includes the respective second spring mechanism 119-2 formed by respective slots, and is symmetrically located along the second movement direction 113-2.

Both the spring mechanisms 119, as depicted, hence comprise a race-track shaped region formed by respective U-shaped slots 302 at outer ends thereof, and further comprise respective inner slots 304 that are symmetrically arranged within the spring mechanisms 119. However, the spring mechanisms 119 further join a respective region 316 of the plate 102, located inside the connecting slots 120 (e.g. and the respective slot spring mechanisms 118), to a remainder of the plate 102 located outside the connecting slots 120 (e.g. and the respective slot spring mechanisms 118). Put another way, the pair of spring mechanisms 119 are connected at respective inner sides 313-1 to the region 316, and connected at respective outer sides 313-2 to a remainder of the plate 102, outside of the region 316 and extending around the region 316.

Furthermore, the spring mechanisms 119 are understood to be biased to a rest position, as depicted, and the spring mechanisms 119 may be expanded or compressed from the rest position to a respective expanded positions or respective compressed positions by applying pressure and/or force to the spring mechanisms 119 as is next explained.

Returning to how the plate 102 is deformed, the plate 102 may include a threaded hole 310 (e.g. represented by parallel broken lines) from an edge 312 thereof, to the inner slot 304 that is along the second movement direction 113-2, through which an adjustment screw may be threaded, such that an end of the adjustment screw is located at the inner edge 308. Such a hole 310 may extend from the edge 312 through the outer side 313-2 of the first spring mechanism 119-1, and through to the inner slot 304, extending into the inner slot 304 to the portion on the inner edge 308of the inner slot 304.

When the adjustment screw is adjusted to exert pressure and/or force 314 on the portion on the inner edge 308, the first spring mechanism 119-1 deforms from a rest position, for example widening the inner slot 304, and a region 316 of the plate 102 located inside the second slot group 110-2 moves towards the second slot spring mechanism 118-2, and the second spring mechanism 119-2 thereof is correspondingly compressed deforms from a respective rest position, thereby moving a light modulator at the light-modulator-mounting position 103 along the second movement direction 113-2, for example towards the second slot spring mechanism 118-2.

Conversely, when the adjustment screw is adjusted to release pressure and/or force 314 on the portion on the inner edge 308, the first spring mechanism 119-1 relaxes towards the rest position (e.g. due the first spring mechanism 119-1 being biased towards the rest position), for example returning the inner slot 304 towards its initial width, for example and the region 316 of the plate 102 located inside the second slot group 110-2 moves away from the second slot spring mechanism 118-2, and the second spring mechanism 119-2 is correspondingly relaxed towards the respective rest position (e.g. due the second spring mechanism 119-2 being biased towards the rest position), thereby moving a light modulator at the light-modulator-mounting position 103 along the second movement direction 113-2, for example away from the second slot spring mechanism 118-2.

In some optional examples, the threaded adjustment screw may be attached to the inner edge 308 using any suitable mechanism, such that the inner edge 308 may be pulled away from the second slot spring mechanism 118-2 along the second movement direction 113-2, compressing the first spring mechanism 119-1 and the inner slot 304, and expanding the second spring mechanism 119-2.

It is understood that the region 316 of the plate 102 is located inside the region 216 of the plate 102, such that a remainder of the plate 102, relative to the region 316 of the plate 102, includes the region 216 of the plate 102, that surrounds the region 216. Hence, when the region 216 is displaced in the first movement direction 113-1, as described with respect to FIG. 2, the region 316 is also displaced in the first movement direction 113-1, but not the second movement direction 113-2. However, when the region 316 is displaced in the second movement direction 113-2, the region 216 is not displaced. Furthermore, the light-modulator-mounting position 103 is located inside both regions 216, 316 such that a light modulator mounted at the light-modulator-mounting position 103 is displaced accordingly. In this manner, the single component convergence mechanism 100 provides controllable displacement of a light modulator mounted at the light-modulator-mounting position 103 in two perpendicular movement directions 113.

It is further understood that a thickness of the plate 102 may be selected to ensure that the plate 102 is deformable, at least at the spring mechanisms 115, 119 of the slot spring mechanisms 114, 118. However, the thickness of the plate 102 may vary, for example being thinner in the regions of the spring mechanisms 115, 119, and thicker elsewhere, for example to accommodate the threaded holes 210, 310 for the threaded adjustment screws, and the like, and/or to provide support for a light modulator mounted at the light-modulator-mounting position 103.

Furthermore, the thickness of the plate 102 may vary depending on the material of the plate 102, which may comprise any suitable metal (e.g. stainless steel and/or aluminum, and the like) and/or plastic (e.g. any suitable thermally resistant plastic suitable for use inside light engines and/or projectors). Indeed, the thickness of the plate 102 may be selected heuristically to ensure a certain amount of elastic deformation of the spring mechanisms 115, 119 of the slot spring mechanisms 114, 118. For example, in a successful prototype, the plate 402 was manufactured from 17-4ph stainless steel, and a thickness of the plate 102 was about 0.25 inches (e.g., about 6.35mm).

Furthermore, the widths of the spring mechanisms 115, 119 of the slot spring mechanisms 114, 118, may be selected to ensure that a light modulator mounted at the light-modulator-mounting position 103, may move in a range of +/- 2 pixels to +/- 4 pixels, in either of the movement directions 113. Similarly, a width of the connecting slots 116, 120, and indeed a width of the slots of the slot groups 110, may be selected to ensure that a light modulator mounted at the light-modulator-mounting position 103, may move in a range of +/- 2 pixels to +/- 4 pixels, in either of the movement directions 113.

For example, the slots of the slot groups 110 and the connecting slots 116, 120 may be in a range of about 0.2 mm wide to about 0.4 mm wide. Indeed, about 0.4 mm may be a maximum width in some examples.

In particular, testing of a prototype of the single component convergence mechanism 100 having dimensions of about 75 mm by 75 mm (e.g., of a region that includes the slot groups 110) and made from 17-4ph stainless steel, with a thickness of about 6.35mm showed that, below about 0.4 mm, deformation of the spring mechanisms 115, 119 of the slot spring mechanisms 114, 118 was elastic (e.g., the spring mechanisms 115, 119 of the slot spring mechanisms 114, 118 returned to an original position when force was removed); and, above about 0.4 mm, deformation of the spring mechanisms 115, 119 of the slot spring mechanisms 114, 118 was plastic (e.g., the spring mechanisms 115, 119 of the slot spring mechanisms 114, 118 did not return to an original position when force was removed). In this prototype, end to end length of a spring mechanism 115, 119 was about 25 mm, while a width of a spring mechanism 115, 119 was about 5 mm.

Hence the thickness of the plate 102, as well as other dimensions of the single component convergence mechanism 100, may be selected heuristically to ensure a certain amount of elastic deformation of the spring mechanisms 115, 119 of the slot spring mechanisms 114, 118. Indeed, the dimensions of the single component convergence mechanism 100 are further selected to accommodate a spatial light modulator, such as a DMD, at the light modulator mounting position 103.

Furthermore, while particular spring mechanisms 115, 119, formed from particular arrangements of slot spring mechanisms 114, 118, have been discussed, any suitable spring mechanisms that enables movement of the regions 216, 316, for example along the movement directions 113, are within the scope of the present specification.

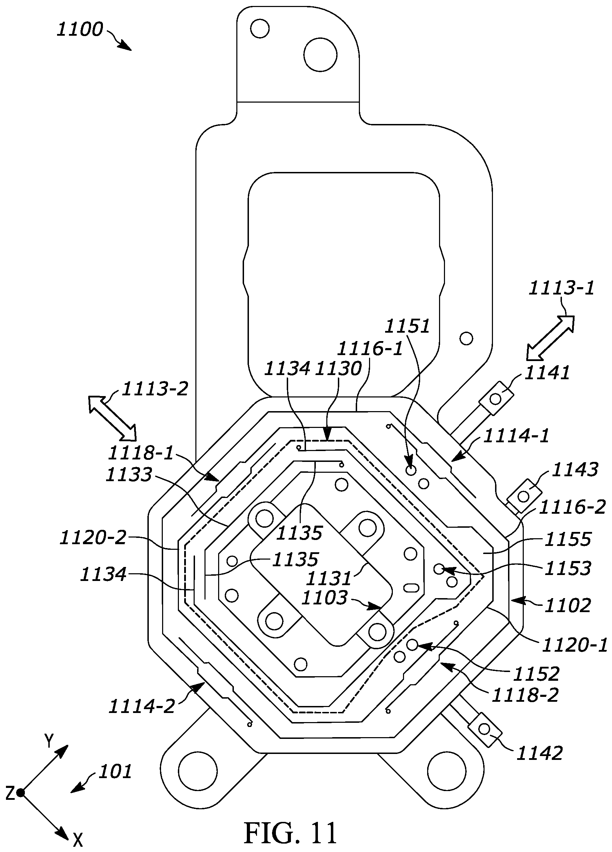

Furthermore, while particular mechanisms for displacement of the regions 216, 316, for example in the form of combinations of the holes 210, 310 and complementary threaded adjustment screws, have been discussed, any suitable mechanisms for displacement of the regions 216, 316 are within the scope of the present specification. For example, adjustment mechanisms may be located on a frame of a light engine to which the single component convergence mechanism 100 is mounted, and which may exert pressure and/or force on the inner edges 208, 308 of the inner slots 204, 304, but without otherwise being attached to the single component convergence mechanism 100. For example, one such adjustment mechanism may be located parallel to the plate 102, and may be movable along a respective movement direction 113, and may include a lip that interfaces with the inner edges 208, 308 of the inner slots 204, 304; hence, when the adjustment mechanism is adjusted, pressure and/or force may be exerted on the inner edges 208, 308 of the inner slots 204, 304 as described with respect to FIG. 2 and FIG. 3. Such a lip may alternatively be connected to the inner edges 208, 308 of the inner slots 204, 304 to facilitate both expansion and compression of the respective spring mechanisms 115, 119. Alternatively, an adjustment screw of an adjustment mechanism may be attached to a suitable position on the plate 102 via one or more respective pins, similar to adjustment mechanisms described with respect to FIG. 11, FIG. 12, FIG. 13 and FIG. 14.

Furthermore, such adjustment mechanisms may be manual and/or such adjustment mechanisms may include stepper motors, and the like, to turn, for example threaded adjustment screws of adjustment mechanisms by given fixed predetermined amounts, using any suitable control mechanism, to perform the adjustments as described herein.

Furthermore, while the single component convergence mechanism 100 has been described with respect to two groups 110 of slots and/or two pairs of slot spring mechanisms 114, 118 and/or two pairs of spring mechanisms 115, 119, for adjusting a position of a light modulator in two directions 113, in other examples, the single component convergence mechanism 100 may comprise only one group 110 of slots and/or one pair of slot spring mechanisms 114, 118 (e.g. the slot spring mechanisms 114 or the slot spring mechanisms 118) and/or one pair of spring mechanisms 115, 119 (e.g. the spring mechanisms 115 formed by the slot spring mechanisms 114, or the spring mechanisms 119 formed by the slot spring mechanisms 118), for adjusting a position of a light modulator in one direction 113.

Attention is next directed to FIG. 4 to FIG. 9, which depict an example of another single component convergence mechanism 400. The single component convergence mechanism 400 is similar to the single component convergence mechanism 100 with regards to thickness and overall functionality, but shows different examples of various slot spring mechanisms and spring mechanisms.

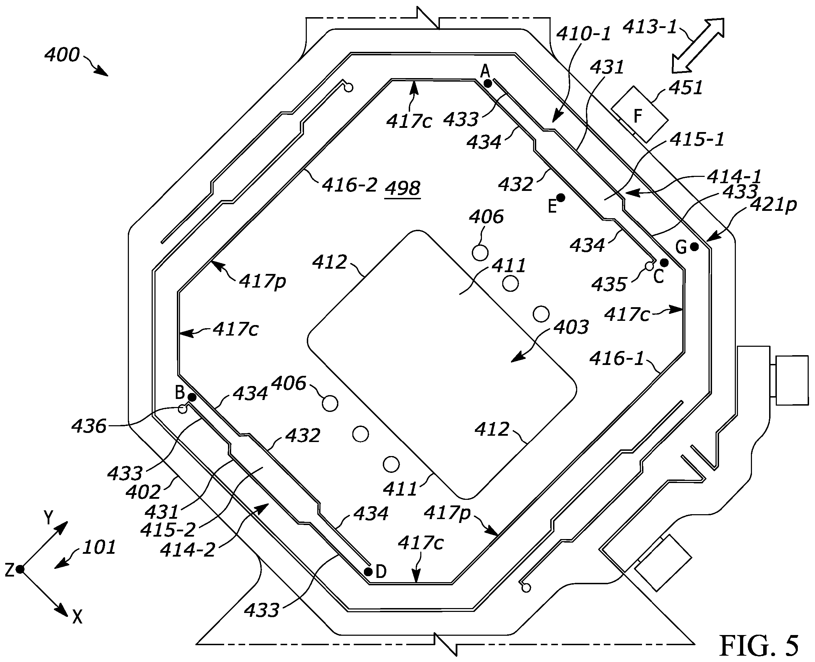

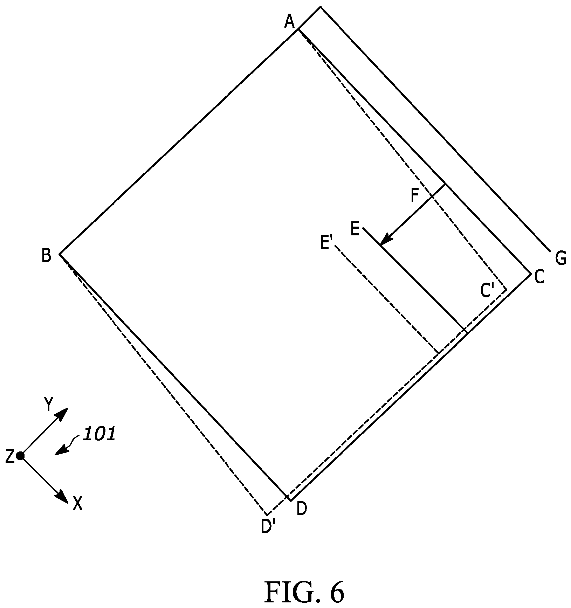

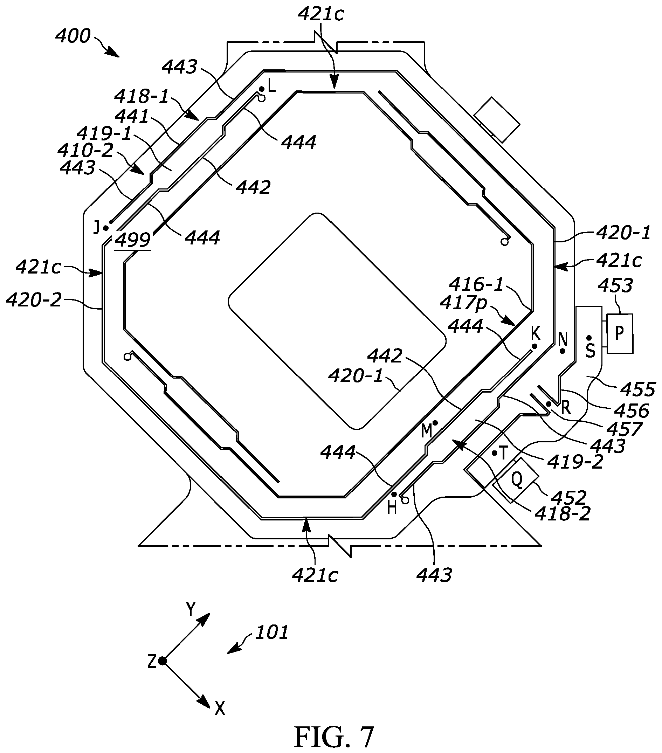

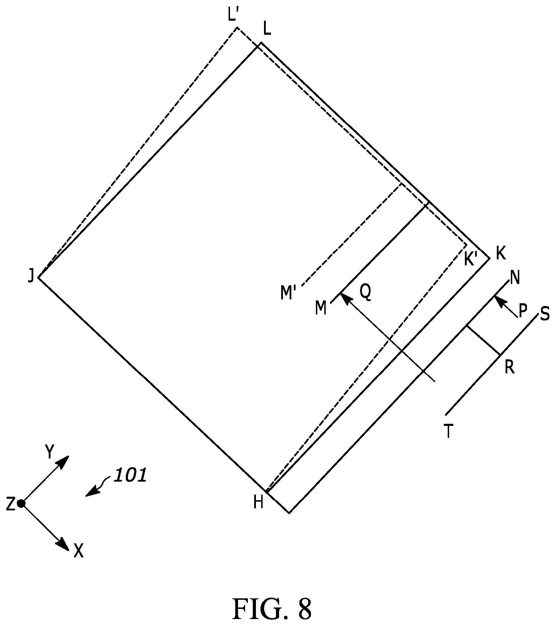

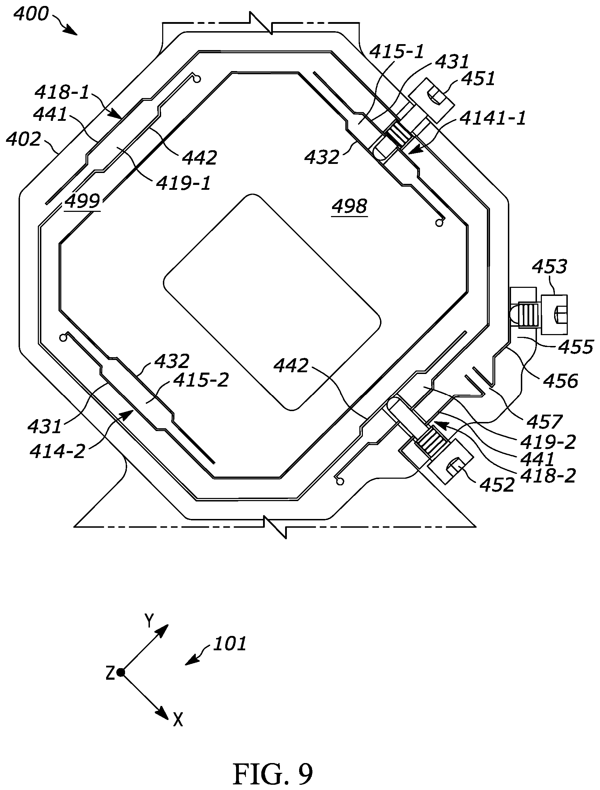

In particular, FIG. 4 depicts the single component convergence mechanism 400. FIG. 5 and FIG. 7 depict detail of the single component convergence mechanism 400 in a REGION C, as indicated in FIG. 4, showing "Y" and "X" axis adjustments. FIG. 6 and FIG. 8 depict respective operation of the "Y" and "X" axis adjustments in a simplified manner. FIG. 9 depicts the single component convergence mechanism FIG. 4, where portions of regions where adjustment mechanisms are located are removed to show positions of adjustment screws of the adjustment mechanisms.

For reference, the XYZ coordinate system 101 is also depicted.

The single component convergence mechanism 400 includes a single at least partially laterally deformable plate 402 (e.g. in at least some regions, as described herein) that may provide robust mechanical X-Y adjustment of a light-modulator-mounting position 404. As depicted, the laterally deformable plate 402 includes arms 404 extending therefrom that may be used to mount the plate 402 to a projector system, and the like, as well as apertures 406, 408 to assist in such mounting and/or for mounting a light modulator to the plate 102.

In particular, a light modulator (not depicted), such as a DMD, may be mounted to the plate 402 at the light-modulator-mounting position 404 via any suitable attachment mechanism, which may utilize the depicted light modulator mounting apertures 406 through the plate 402. For example screws, bolts, and the like may be threaded through the light modulator mounting apertures 406, and complimentary apertures of the light modulator, to attach a light modulator to the plate 402. However, a light modulator may be attached to the plate 402 in any suitable manner, but with an orientation as described herein.

Similarly, the plate 402 may be mounted to a frame (not depicted) of a light engine (e.g., a projector) via any suitable attachment mechanism, which may utilize depicted frame mounting apertures 408 through the plate 402. For example screws, bolts, and the like may be threaded through the frame mounting apertures 408, and complimentary apertures of a frame of a light engine, to attach the plate 402 to the frame. However, the plate 402 may be attached to a frame of a light engine in any suitable manner.

Such a light engine may in turn be a component of a projector. Furthermore, such a light engine may include three single component convergence mechanisms 400, one for each of red, green and blue channels. Furthermore, while light modulators as described herein may include DMDs, any suitable light modulators are within the scope of the present specification, including, but not limited to, liquid crystal on silicon (LCOS) light modulators, and the like.

A position of a light modulator mounted at the light-modulator-mounting position 404 may be adjusted, relative to the frame of the light engine, and/or relative to other light modulators of the light engine, via various spring mechanisms, formed by various slots in the plate 402, to which pressure and/or force may be applied, for example laterally and/or in a plane of the plate 402.

As depicted, the plate 402 may include two slot groups 410-1, 410-2 of slots through the plate 402, (e.g. collectively referred to as the groups 410 and/or the slot groups 410 and, generically, as a group 410 and/or a slot group 410), with each slot group 410 dedicated to displacing respective regions of the plate 402 respectively within the slot groups 410, laterally in respective perpendicular directions, which may correspond to X and Y movement directions of a light modulator mounted at the light-modulator-mounting position 404.

As such, it is understood that any mechanism used to attach a light modulator to the plate 402 generally attaches the light modulator at the light-modulator-mounting position 404, with respective edges thereof being perpendicular to directions of movement. For example, assuming edges 411, 412 of a depicted rectangular aperture of the light-modulator-mounting position 404 represents locations of respective edges of a light modulator mounted to the plate 402, a first slot group 410-1 is understood to be dedicated to moving the edges 411 in a first movement direction 413-1 (e.g. a Y direction) perpendicular to the edges 411, and a second slot group 410-2 is understood to be dedicated to moving the edges 412 in a second movement direction 413-2 (e.g. an X direction) perpendicular to the edges 412. The first movement direction 413-1 and the second movement direction 413-2 (e.g. movement directions 413 and/or a movement direction 413) are understood to be perpendicular to each other.

Furthermore, in contrast to the slot groups 110, the first slot group 410-1 is understood to be located inside, and/or nested inside, the second slot group 410-2 so that movement of the light modulator in the first movement direction 413-1 and the second movement direction 413-2 may be performed independent of each other. The examples of FIG. 1 and FIG. 4 illustrate that respective slot groups 110, 410 may be nested in any suitable manner.

In particular, the first group 410-1 includes two slot spring mechanisms 414-1, 414-2 (e.g. slot spring mechanisms 414 and/or a slot spring mechanism 414) that are symmetrically located opposite each other at the plate 402, on either side of the light-modulator-mounting position 404. The slot spring mechanisms 414-1, 414-2 generally form respective spring mechanisms 415-1, 415-2 (e.g. spring mechanisms 415 and/or a spring mechanism 415) that are also symmetrically located opposite each other at the plate 102, on either side of the light-modulator-mounting position 103. The slot spring mechanisms 414-1, 414-2 and/or the spring mechanisms 415-1, 415-2 are also symmetrically located opposite each other at the plate 402, on either side of the light-modulator-mounting position 404. The slot spring mechanisms 414 are connected to each other via respective connecting slots 416-1, 416-2 (e.g. connecting slots 416 and/or a connecting slot 416) that are symmetrical to each other relative to the first movement direction 413-1, such that, when the opposite slot spring mechanisms 414 and/or the opposite spring mechanism 415 are deformed laterally in a plane of the plate 402, a laterally displaceable region 498 of the plate 402 contained within the connecting slots 416 moves in the first movement direction 413-1.

In some examples, as depicted, at least a portion (e.g., parallel portions 417p) of the respective connecting slots 416 may be parallel and/or about parallel to the first movement direction 413-1 such that, when the slot spring mechanisms 414 are compressed or expanded in the first movement direction 413-1, the region 498 of the plate 402 contained within the connecting slots 416 moves in the first movement direction 413-1 relative to a remainder of the plate 402 outside the connecting slots 416. Further, any remaining portions (e.g., connecting portions 417c) of the respective connecting slots 416 that are not parallel to the first movement direction 413-1, and connect the connecting slots 416 to the slot spring mechanisms 414, may have a width or widths that allows the region 498 of the plate 402 contained within the connecting slots 416 to move a given distance along the first movement direction 413-1, for example to displace a light modulator at light-modulator-mounting position 404 to move the given distance. Indeed, at extreme displacements, the region 498 of the plate 402 contained within the connecting slots 416 may touch a remainder of the plate 402 outside the connection slots 416. Furthermore, the connecting portions 417c are understood to connect the parallel portions 417p to the slot spring mechanisms 414, and may have any suitable geometry that allow the region 498 to laterally displace as described herein.

Similarly, the second slot group 410-2 includes two slot spring mechanisms 418-2, 418-2 (e.g. slot spring mechanisms 418 and/or a slot spring mechanism 418) that are symmetrically located opposite each other at the plate 402, on either side of the light-modulator-mounting position 404. The slot spring mechanisms 418-1, 418-2 generally form respective spring mechanisms 419-1, 419-2 (e.g. spring mechanisms 419 and/or a spring mechanism 419) that are also symmetrically located opposite each other at the plate 402, on either side of the light-modulator-mounting position 404. The slot spring mechanisms 418 are connected to each other via respective connecting slots 420-1, 420-2 (e.g. connecting slots 420 and/or a connecting slot 420) that are symmetrical to each other relative to the second movement direction 413-2, such that, when the opposite slot spring mechanisms 418 and/or the opposite spring mechanism 419 are deformed laterally in a plane of the plate 402, a laterally displaceable region 499 of the plate 402 contained within the connecting slots 420 moves in the second movement direction 413-2.

Similar to the connecting slots 416, in some examples, as depicted, at least a portion 421p (e.g., parallel portions 421p) of the respective connecting slots 420 may be parallel and/or about parallel to the second movement direction 413-2 such that, when the slot spring mechanisms 418 are compressed or expanded in the second movement direction 413-2, the region 499 of the plate 402 contained within the connecting slots 420 moves in the second movement direction 413-2 relative to a remainder of the plate 402 outside the connecting slots 420. Further, any remaining portions (e.g., connecting portions 421c) of the respective connecting slots 420 that are not parallel to the second movement direction 413-2, may have a width or widths that allows the region 499 of the plate 402 contained within the connecting slots 420 to move a given distance along the second movement direction 413-2, for example to displace a light modulator at light-modulator-mounting position 404 to move the given distance. Indeed, at extreme displacements, the region 499 of the plate 402 contained within the connecting slots 420 may touch a remainder of the plate 402 outside the connection slots 420. Furthermore, the connecting portions 421c are understood to connect the parallel portions 421p to the slot spring mechanisms 418, and may have any suitable geometry that allow the region 499 to laterally displace as described herein.

It is understood that the region 498 of the plate 402 is located inside the region 499 of the plate 402, such that a remainder of the plate 402, relative to the region 499 of the plate 402, includes the region 499 of the plate 402, that surrounds the region 498. Hence, when the region 499 is displaced in the second movement direction 413-2, the region 498 is also displaced in the second movement direction 413-2, but not the first movement direction 413-1. However, when the region 498 is displaced in the first movement direction 413-1, the region 499 is not displaced. Furthermore, the light-modulator-mounting position 403 is located inside both regions 498, 499 such that a light modulator mounted at the light-modulator-mounting position 403 is displaced accordingly. In this manner, the single component convergence mechanism 400 provides controllable displacement of a light modulator mounted at the light-modulator-mounting position 403 in two perpendicular movement directions 413.

The slot spring mechanisms 414, 418 will be described in further detail herein, but in general may comprise slots arranged to manage plate elastic deformations under stress conditions (e.g. such as lateral stress conditions), and geometries of such slots may vary. Furthermore, it is understood that width of slots of the slot spring mechanisms 414, 418 may vary and/or may refer to specific widths of the slots varying along the length of the slots and/or the arrangement of the slots relative to each other varying along their respective lengths. For example, as will be next described, the slot spring mechanisms 414, 418 comprise respective arrangement of slots that form respective spring mechanisms 415, 419 that may be compressed, or may be expanded, along respective movement directions 413, and may further be biased to a rest position. Furthermore, while specific arrangements of slots are described herein, any suitable arrangement of slots that form respective spring mechanisms 415, 419 that may be compressed, or may be expanded, along respective movement directions 413, and may further be biased to a rest position are within the scope of the present specification.

Details of the slot spring mechanisms 414 are next described.

In particular, the slot spring mechanisms 414 respectively comprise: an outer slot 431; and an inner slot 432. As used herein the terms "outer" and "inner" are understood to be relative to a center of the plate 402, and the like, such that the outer slot 431 is further from a center of the plate 402 than the inner slot 432.

The outer slots 431 are joined via a first connecting slot 416-1 of the pair of connecting slots (1116) 416, and the inner slots 432 are joined via a second connecting slot 416-2 of the pair of connecting slots (1116) 416, for example via respective parallel portions 417p and connecting portions 417c.

Furthermore, as depicted, the outer slots 431, in combination with a respective connecting slot 416-1, may form a first U-shaped slot and, similarly, the inner slots 432, in combination with a respective connecting slot 416-2, may form a second U-shaped slot. In particular, portions of the second U-shaped slot corresponding to the inner slots 432 are understood to be adjacent to portions of the first U-shaped slot corresponding to the outer slots 431. Furthermore, the openings of the first and second U-shaped slots are understood to be facing each other, but with the openings of the second U-shaped slot lying inside the opening of the first U-shaped slot.

It is further understood that a pair of an outer slot 431 and an inner slot 432 form a beam structure therebetween (e.g., corresponding to the spring mechanisms 415), and furthermore, a distance between a pair of an outer slot 431 and an inner slot 432 is wider in a center portion than end portions. For example, with attention directed to the spring mechanism 415-1, opposite end portions 433 of the outer slot 431 are closer to respective opposite end portions 434 of the inner slot 432 than center portions of the slots 431, 432. The center portions of the slots 431, 432 are joined to the respective end portions 433, 434 via respective angled and/or joining portions. These narrower portions serve to narrow the beam structure. In particular, the beam structure being narrower at opposite ends thereof (e.g., at opposite end portions 434), and wider at center portions, assists in controlling where the bending of the slot spring mechanisms 414 and/or the beam structures occur. For example, as will be described herein, an adjustment mechanism, in the form of an adjustment screw provides a force that deforms the slot spring mechanisms 414 and/or the beam structures. The outer narrow portions of the beam structure are weaker than the central wider portion, causing the outer narrow portions to deform while the central wider portions remain rigid with minimal deformation.

Put another way, the pair of slot spring mechanisms 414 respectively comprise an outer slot 431 and an inner slot 432, wherein a distance between the outer slot 431 and the inner slot 432 is greater at a respective center portions than at respective end portions.

Also depicted in FIG. 4 are holes 435, 436 through the plate 402 that may assist with the displacement of the position 403 as described herein. In particular, the hole 435 is located at a terminus of an end portion 434 of the inner slot 432 of the first slot spring mechanism 414-1, and in particular at a terminus of the end portion 434 that is opposite of the other inner slot 432 that joins to the connecting portion 417c of the second connecting slot 416-2. As depicted, the hole 435 is slightly perpendicularly offset from the end of the end portion 434, towards the position 403, and joined to the end portion 434 via a small joining slot perpendicular to the end portion 434.

Similarly, the hole 436 is located at a terminus of an end portion 433 of the outer slot 431 of the second slot spring mechanism 414-2, and in particular at a terminus of the end portion 433 that is opposite the other outer slot 431 that joins to the connecting portion 417c of the first connecting slot 416-1. As depicted, the hole 436 is slightly perpendicularly offset from the end of the end portion 433, away from the position 403, and joined to the end portion 433 via a small joining slot perpendicular to the end portion 433.

It is understood, however that the holes 435, 436 are indicated for completeness and are generally non-functional. Rather, slots of the depicted single component convergence mechanism 400 may be manufactured using a wire EDM (electrical discharge machining) process, where an electrical current vaporizes a thin slot in material of the plate 402 via a wire that moves along a cutting path along which slots are formed; to insert the wire into the material of the plate 402 to start the wire EDM process, the holes 435, 436 pre-drilled at the start of the cutting path.

As depicted the slot spring mechanisms 418 have a structure similar to the slot spring mechanisms 414 and include respective outer slots 441, inner slots 442, end portions 443, 444 and holes 445, 446, with perpendicular offsets of the holes 445, 446 also being in a movement direction (e.g., and/or a displacement direction).

Also depicted in FIG. 4 are adjustment mechanisms 451, 452, 453 in the form of respective adjustment screws. The adjustment mechanism 451 is configured to configured to apply pressure and/or force to one spring mechanism 415, of the pair of spring mechanisms 415, to laterally displace the region 498 within the plane in the first movement direction 413-1. Similarly, the adjustment mechanism 452 is configured to apply pressure and/or force to one spring mechanism 419, of the pair of spring mechanisms 419, to laterally displace the region 499 within the plane in the second movement direction 413-2. The adjustment mechanism 453 may be used to make finer adjustments to displacement of the region 499, as described herein with respect to FIG. 8; in particular, however, it is understood that the adjustment mechanism 453 comprises a spring mechanism 455 that is separated from the remainder of the plate 402 by slots 456 and joined to the remainder of the plate 402 by a tab 457.

With brief reference to FIG. 9, which depicts details of the adjustment mechanisms 451, 452, 453 through partial cutaways of the plate 402 around the spring mechanisms 415-1, 419-2, 455. In particular, the adjustment mechanisms 451, 452, 453 comprise threaded adjustment screws and it is understood that a side of the plate 402 opposite a depicted side may provide a threaded hole (e.g., similar to the threaded holes 310) through which a respective adjustment screw may be threaded and adjusted to exert pressure and/or force on a portion of the plate 402 adjacent an inner slot.

Using the first adjustment mechanism 451 as an example, as the respective adjustment screw is adjusted to place pressure and/or force on a portion of the plate 402 adjacent the inner slot 432 of the first slot spring mechanism 414-1, the first spring mechanism 415-1 deforms from a rest position, for example widening the outer slot 431 and inner slot 432 thereof, and the region 498 of the plate 402 located inside the first slot group 410-1 moves towards the second spring mechanism 415-2, and the second spring mechanism 415-2 is correspondingly compressed and deforms from a respective rest position such that respective outer slot 431 and inner slot 432 narrow, thereby moving a light modulator at the light-modulator-mounting position 403 along the first movement direction 413-1. Releasing the threaded adjustment screw of the first adjustment mechanism 451 causes the spring mechanisms 415 to relax back to their respective rest positions.

A similar process may occur with the second adjustment mechanism 452 the spring mechanism 419, and the region 499, though, in some instances, the third adjustment mechanism 453 may be used to adjust the spring mechanism 419, as described herein with respect to FIG. 7 and 8. However, FIG. 9 clearly illustrates that a threaded adjustment screw of the second adjustment mechanism 452 may be attached (e.g., via a threaded hole) to the plate at the spring mechanism 455, in a position that may cause the second adjustment mechanism 452 to apply pressure and/or force to the spring mechanism 419-2 as described with respect to FIG. 7 and FIG. 8.

Alternatively, an adjustment screw of an adjustment mechanism 451, 452 may be attached to a suitable position on the plate 402 via one or more respective pins, similar to adjustment mechanisms described with respect to FIG. 11, FIG. 12, FIG. 13 and FIG. 14.

Furthermore, the thickness of the plate 402 may be selected to enable such distortions and/or elastic deformations, and may vary depending on the material of the plate 402, which may comprise any suitable metal (e.g. stainless steel and/or aluminum, and the like) and/or plastic (e.g. any suitable thermally resistant plastic suitable for use inside light engines and/or projectors). Indeed, the thickness of the plate 402 may be selected heuristically to ensure a certain amount of elastic deformation of the spring mechanisms 415, 419 of the slot spring mechanisms 414, 418.

Furthermore the thickness of the plate 402, as well as other dimensions, may be selected heuristically to ensure a certain amount of elastic deformation of the spring mechanisms 415, 419 of the slot spring mechanisms 414, 418.

Furthermore, the dimensions of the spring mechanisms 415, 419 of the slot spring mechanisms 414, 418, may be selected to ensure that a light modulator mounted at the light-modulator-mounting position 404, may move in a range of +/- 2 pixels to +/- 4 pixels, in either of the movement directions 413. Similarly, a width of the connecting slots 416, 420, and indeed of slots of the slot groups 410, may be selected to ensure that a light modulator mounted at the light-modulator-mounting position 404, may move in a range of +/- 2 pixels to +/- 4 pixels, in either of the movement directions 413.

Furthermore, the slots of the single component convergence mechanism 400 may be in a range of about 0.2 mm wide to about 0.4 mm wide. Indeed, about 0.4 mm may be a maximum width in some examples. In particular, testing of a prototype of the single component convergence mechanism 400 having dimensions of about 75 mm by 75 mm (e.g., of a region that includes the slot groups 410) and made from 17-4ph stainless steel, with a thickness of about 6.35mm showed that, below about 0.4 mm, deformation of the spring mechanisms 415, 419 of the slot spring mechanisms 414, 418 was elastic (e.g., the spring mechanisms 415, 419 of the slot spring mechanisms 414, 418 returned to an original position when force was removed); and, above about 0.4 mm, deformation of the spring mechanisms 415, 419 of the slot spring mechanisms 414, 418 was plastic (e.g., the spring mechanisms 415, 419 of the slot spring mechanisms 414, 418 did not return to an original position when force was removed).

Furthermore, at the successful prototype, beam structures of the spring mechanisms 415, 419 were about 30 mm long (e.g., between outer ends of the pair of end portions 433 and/or the pair of end portions 434, and between outer ends of the pair of end portions 443 and/or the pair of end portions 443). Furthermore, the beams structures of the spring mechanisms 415, 419 may be about 0.2 inches wide (e.g., about 5 mm) at the center of the slots 431, 432 and the center of the slots 441, 442, and about 0.8 wide between the end portions 433, 434 and between the end portions 443, 444. As such a cross-section of the wider portions of the beam structures may be about 0.25" (6.35 mm) x about 0.2" (5.1 mm) in a center region thereof, and a cross-section of the narrower portions of the beam structures may be about 0.25" (6.35 mm) x about 0.08" (e.g., 2mm) at end regions thereof. Such a combination of widths using stainless steel may provide sufficient stiffness in the Z-direction while allowing flexibility in the X-direction and the Y-direction at least within the narrower sections of the beam structure. Hence, in general, the narrower areas may be about 40% of the wider areas of the beam structure. However, selection of such cross sectional areas may occur heuristically and may include any suitable dimensions.

Hence the thickness of the plate 402, as well as other dimensions of the single component convergence mechanism 400 may be selected heuristically to ensure a certain amount of elastic deformation of the spring mechanisms 415, 419 of the slot spring mechanisms 414, 418. Indeed, the dimensions of the single component convergence mechanism 400 are further selected to accommodate a spatial light modulator, such as a DMD, at the light modulator mounting position 403.

Y-Axis adjustment (e.g., the movement direction 413-1) is next described in more detail with respect to FIG. 5 and FIG. 6. Reference to a "stage" in the following discussion are understood to refer to a "stage" of operating the single component convergence mechanism 400 to make the Y-Axis adjustment. Furthermore certain points and/or components on the single component convergence mechanism 400 are labelled "A", "B", "C", "D", "E", "F", "G" in both FIG. 5 and FIG. 6 for easy reference.

In particular the point "A" is located between end portions 433, 434 of the first slot spring mechanism 414-1, and more specifically where the end portion 434 of the first slot spring mechanism 414-1 connects to the connecting portion 417c of the second connecting slot 416-2.

The point "B" is located between end portions 433, 434 of the second slot spring mechanism 414-2, and more specifically where the end portion 434 of the second slot spring mechanism 414-2 connects to the connecting portion 417c of the second connecting slot 416-2.

The point "C" is located between end portions 433, 434 of the first slot spring mechanism 414-1, and more specifically where an end portion 433 of the first slot spring mechanism 414-1 connects to the connecting portion 417c of the first connecting slot 416-1. Indeed, the point "C" is located at opposite end of the first slot spring mechanism 414-1 as the point "A".

The point "D" is located between end portions 433, 434 of the second slot spring mechanism 414-2, and more specifically where an end portion 433 of the second slot spring mechanism 414-2 connects to the connecting portion 417c of the first connecting slot 416-1. Indeed, the point "D" is located at opposite end of the first slot spring mechanism 414-1 as the point "C".

The point "E" is located at the plate 402 adjacent the inner slot 432 of the slot spring mechanism 414-1 where a threaded adjustment screw "F" (e.g., of the adjustment mechanism 451) applies pressure and/or force.

The point "G" is located between an end portion 433 and a parallel portion 421p of a connecting portion 420-1 closest to the slot spring mechanism 414-1, on a line that joins the points "C" and "D"

Furthermore, it is understood that the points "A-C" define a "beam" (e.g. a spring mechanism formed by respective slots 431, 432 the first slot spring mechanism 414-1, and/or formed by the first spring mechanism 415-1).

Similarly, the points "B-D" define a "beam" (e.g. a spring mechanism formed by respective slots 431, 432 the second spring mechanism 414-2, and/or formed by the second spring mechanism 415-2).

Furthermore, from the pair of points "A" and "C", and the pair of points "B" and "D" it is apparent that the slot spring mechanisms 414 are connected to the region 498 at first respective ends represented by the points "C" and "D", and the slot spring mechanisms 414 are connected to the remainder of the plate 402 (e.g., outside the region 498) at second respective ends, represented by the points "C" and "D", opposite the first respective ends.

In operation the threaded adjustment screw "F" may be operated to apply force at the point "E" (e.g., at the plate 402 adjacent the inner slot 432 of the slot spring mechanism 414-1) and the force translated to the beam "A-C" causing distortion and/or movement of the beam "A-C" via the point "C". This distortion is best seen in FIG. 6, with respect to the broken lines, where solid lines in FIG. 6 show rest positions of points, and the broken lines show positions of the solid lines when distorted when the screw "F" applies a force to the point "E". Similarly, distortion and/or movement of the beam "B-D" occurs due to lateral translation of the force via the point "D". Indeed, from FIG. 6, positions of points "C", "E" and "D" after distortion are respectively labelled as points "C'", "E'" and "D'".

Furthermore, as has been previously described, it is understood that cross sections of the plate 402 through a Y-Z plane (e.g., with reference to the XYZ coordinate system 101) at the points "A", "B", "C", and "D" may be reduced in cross sectional area with respect to other areas of the plate 402 to ensure that distortion takes place at these points "A", "B", "C", "D", creating a relative position change between points "G-A-B" and points "C-E-D", as best seen in FIG. 6. Indeed, the points "G-A-B" generally remain in the same relative position to each other, and while the points "C-E-D" also remain in the same relative position to each other, the points "C-E-D" move in relation to points "G-A-B". Put another way, the points "A-B-C-D" provide a 4-bar parallelogram linkage; as there are thinner sections in the beam "A-C" and similarly in the beam "B-D", when force is applied to the 4--bar parallelogram linkage (e.g., at point "E" in this instance) the thinner sections act as pseudo pivot points causing the single component convergence mechanism 400 to distort.

Furthermore, the cross-sectional areas at points "A", "B", "C", and "D" may be heuristically selected to allow hand tightening of the screw F such that a force applied by the screw F, when tightened by hand, at the point E causes the plate 402 to be distorted elastically and return to its original position when the screw force of the screw F is backed off. Such tightening by hand may be via manual twisting of a head of the screw F, and/or using any suitable screw drive, Allen key, and the like that the head of the screw F is configured to accept.

The cross-sectional areas of the points "A", "B", "C", and "D" may be further selected to resist distortion when other residual ambient forces are applied to the single component convergence mechanism 400 (e.g., due to normal handling, vibrations from motors and fans in proximity thereto, building vibrations due to human traffic, and the like). A thickness of the plate 402 in the Z axis may be further heuristically selected to be "thick enough" to ensure that no distortion takes place in the Z axis (e.g., under any conditions), and may depend on a material of the single component convergence mechanism 400, which, in some examples, may be stainless steel.

With reference to FIG. 7 and 8, X-Axis adjustment of the single component convergence mechanism 400 is next described, which is similar to the Y-Axis adjustment, but in a direction perpendicular thereto. Reference to a "stage" in the following discussion are understood to refer to a "stage" of operating the single component convergence mechanism 400 to make the X-Axis adjustment. Furthermore, it is understood that the stages of Y-Axis adjustment and X-Axis adjustment may occur in any suitable order. Furthermore certain points and/or components on the single component convergence mechanism 400 are labelled "H", "J", "K", "L", "M", "N", "S", "T" in both FIG. 7 and FIG. 8 for easy reference.

In particular the point "H" is located between end portions 443, 444 of the second slot spring mechanism 418-2, and more specifically where an end portion 444 of the second slot spring mechanism 418-2 connects to a connecting portion 421c of the second connecting slot 420-2.

The point "J" is located between end portions 443, 444 of the first slot spring mechanism 418-1, and more specifically where an end portion 444 of the first slot spring mechanism 418-1 connects to a connecting portion 421c of the second connecting slot 420-2.

The point "K" is located between end portions 443, 444 of the second slot spring mechanism 418-2, and more specifically where an end portion 443 of the second slot spring mechanism 418-2 connects to the connecting portion 421c of the first connecting slot 420-1. Indeed, the point "K" is located at opposite end of the second slot spring mechanism 418-2 as the point "H".

The point "L" is located between end portions 443, 444 of the first slot spring mechanism 418-1, and more specifically where an end portion 443 of the first slot spring mechanism 418-1 connects to the connecting portion 421c of the first connecting slot 420-1. Indeed, the point "L" is located at opposite end of the first slot spring mechanism 418-1 as the point "J".

The point "M" is located at the plate 402 adjacent the inner slot 442 of the second slot spring mechanism 418-2 where a threaded adjustment screw "Q" (e.g., of the adjustment mechanism 452) applies pressure and/or force.

The point "N" is located between an end portion 443 and an outer edge of the plate 402, on a line that joins the points "K" and "L".

Furthermore, it is understood that the points "H-K" define a "beam" (e.g. a spring mechanism formed by respective slots 441, 442 the second slot spring mechanism 418-2, and/or formed by the second spring mechanism 419-2).

Similarly, the points "J-L" define a "beam" (e.g. a spring mechanism formed by respective slots 441, 442 the first spring mechanism 418-1, and/or formed by the first spring mechanism 419-1).

Furthermore, a threaded adjustment screw "P" of the adjustment mechanism 453 is shown, as is a threaded adjustment screw "Q" of the adjustment mechanism 452. However, the adjustment mechanism 453

The point "R" is located at the tab 457.

The point "S" is located at the spring mechanism 455 adjacent the threaded adjustment screw "P".

The point "T" is located at the spring mechanism 455 adjacent the threaded adjustment screw "Q".

Furthermore, it is understood that the points "S-T" define a "beam" (e.g. the spring mechanism 455), that may pivot around the tab 457.

Furthermore, from the pair of points "H" and "K", and the pair of points "J" and "L" it is apparent that the slot spring mechanisms 418 are connected to the region 499 at first respective ends represented by the points "H" and "L", and the slot spring mechanisms 418 are connected to the remainder of the plate 402 (e.g., outside the region 499) at second respective ends, represented by the points "J" and "K", opposite the first respective ends.

The threaded adjustment screw "P" may be operated to apply force between the points "N" and "S" causing the beam "S-T" to pivot at point "R" . This motion in turn causes threaded adjustment screw "Q" to apply force on the point "M". The force applied at point "M" causes the single component convergence mechanism 400 to distort, similar to as described above with respect to FIG. 5 and FIG. 6, but in the X movement direction 413-2. In FIG. 8 solid lines rest positions of the points, whereas the broken lines show lines corresponding to the solid lines, but distorted when the screw "Q" applies a force to point "M".

Similarly, distortion and/or movement of the beam "J-L" occurs. Indeed, from FIG. 7, positions of points "K", "L" and "M" after distortion are respectively labelled as points "K'", "L"' and "M'".

Cross-sectional areas of the points "H", "J", "K", and "L" may be selected in a manner similar to the points "A", "B", "C", and "D".

Furthermore, in some examples, the threaded adjustment screw "P" may be optional, and the adjustment may occur via operation of threaded adjustment screw "Q". Indeed, the threaded adjustment screw "P" and the spring mechanism 455 may be included merely to provide an additional degree of freedom to the adjustment and/or as, due to a geometry of the arms 404, the threaded adjustment screw "Q" may be challenging to access. Indeed, in some examples, an initial distortion of the plate 402 in the X-axis movement direction 413-2 may be set, and then further adjusted with the threaded adjustment screw "P".

Indeed, the threaded adjustment screws "P", "Q" may be of different pitches, with a pitch of the threaded adjustment screw "P" being finer than a pitch of the threaded adjustment screw "Q". In these examples, an initial distortion of the plate 402 may be achieved in the X-direction using the threaded adjustment screw "Q", and more finally adjusted using the threaded adjustment screw "P".

It is furthermore understood that the single component convergence mechanism 400 may be adapted to include a fourth adjustment mechanism, similar to the third adjustment mechanism 453, to adjust the threaded adjustment screw "F" in a similar manner.

Furthermore, the threaded adjustment screws "F", "P" and "Q" may be provided with knurls on edges for hand adjustment and/or may be adapted to received screw-drivers, Allen Keys, and the like.

In general, testing of prototypes of the single component convergence mechanism 400 show that the single component convergence mechanism 400 provides adjustment in two perpendicular directions and is resistant to ambient forces, while reducing a cost to manufacture relative to prior art solutions.

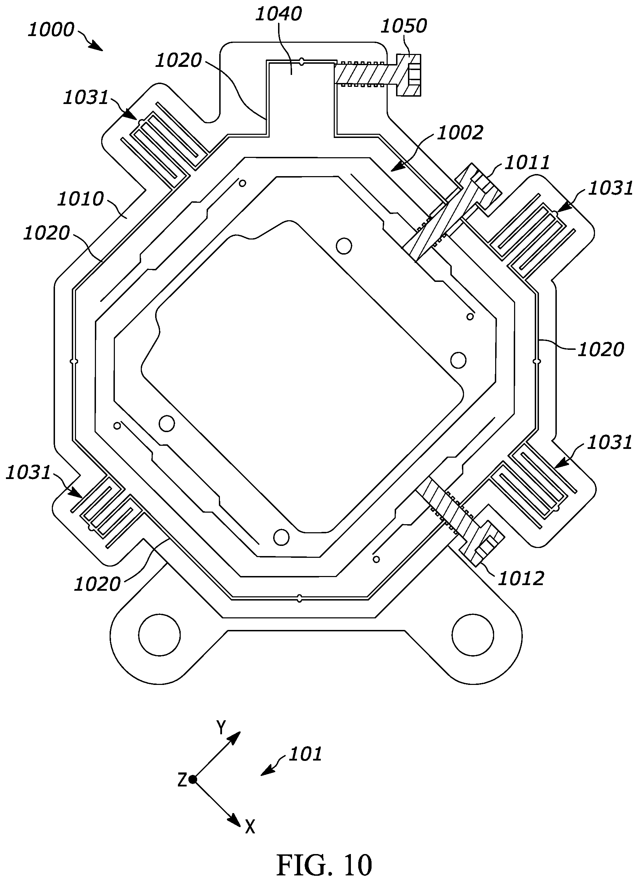

Attention is next directed to FIG. 10, which depicts another example of a single component convergence mechanism 1000, that is similar to the single component convergence mechanism 400, but with the X and Y adjustment mechanisms of FIG. 5 and FIG, 7 nested within a third adjustment mechanism, providing rotation to the center of the X and Y adjustment mechanisms. For example, the single component convergence mechanism 1000 includes an inner portion 1002 that is similar to the single component convergence mechanism 400 with adjustment mechanisms 1011, 1012 corresponding to the adjustment mechanisms 451, 452 to enable adjustment in perpendicular directions.

This single component convergence mechanism 1000 may also make accessibility to one or more of the screws difficult to implement "as is", but the P-Q screw pivot concept described with reference to FIG. 7, may be used to make all screws accessible from the top of the single component convergence mechanism 1000.

The inner portion 1002 is separated from an outer portion 1010 via slots 1020, and the outer portion 1010 generally surrounds the inner portion 1002. Hower the inner portion 1002 and the outer portion 1010 are joined via any suitable number of spring mechanisms 1031, for example as depicted four spring mechanisms 1031, that enable the inner portion 1002 to rotate radially relative to the outer portion 1010. The spring mechanisms 1031 comprise respective planar serpentine spring structures. The planar serpentine spring structures comprise respective pluralities of parallel elongate segments arranged in a zig-zag or serpentine geometry, wherein adjacent segments are joined by U-shaped or curved transitional portions that alternate in direction to define a compact, folded layout.

Furthermore, a tab 1040 extends outward from the inner portion 1002, that is also separated from the outer portion 1010 by a slot 1020. An adjustment mechanism 1050, for example as depicted a threaded adjustment screw through a threaded hole in the outer portion 1010, may be adjusted to exert a lateral force on the tab 1040 thereby rotating the inner portion 1002 relative to the outer portion 1010 as the spring mechanisms 1031 rotate in response to the force on the tab 1040.

It is further understood that one or more of the adjustment mechanisms 1011, 1012, 1050 of the single component convergence mechanism 1000 may be adapted to include adjustment mechanisms by the threaded adjustment screws "P" and "Q".

It is yet further understood that the adjustment mechanism 1050 and the spring mechanisms 1031 may be replaced by any suitable rotational adjustment mechanism that may at least partially rotate the inner portion 1002 and/or a plane thereof (e.g., similar to the plate 402).

Regardless, the single component convergence mechanism 1000 provides the two axis adjustments of the single component convergence mechanism 400, but further enabled for rotational adjustments.

Attention is next directed to FIG. 11, which depicts another example of a single component convergence mechanism 1100, that is similar to the single component convergence mechanism 400, but with a third adjust mechanism nested within the X and Y adjustment mechanisms of FIG. 5 and FIG. 7, the third adjustment mechanism providing rotation to the center of the X and Y adjustment mechanisms.

For example, the single component convergence mechanism 1100 in the form of an octagonal plate which includes a portion 1102 that is similar to the single component convergence mechanism 400, and contains a light-modulator-mounting position 1103 similar to the light-modulator-mounting position 403. While not indicated for simplicity, the light-modulator-mounting position 1103 includes apertures, similar to the apertures 406, to which a light modulator may be mounted. While also not indicated for simplicity, the single component convergence mechanism 1100 further includes arms and respective apertures for mounting to a light engine and/or a projector.

A first movement direction 1113-1 and a second movement direction 1113-2 are also shown, corresponding to Y and X movement directions respectively, as indicated by the XYZ coordinate system 101.

The portion 1102 comprises a first pair of slot spring mechanisms 1114-1, 1114-2 (e.g., slot spring mechanisms 1114 and/or a slot spring mechanism 1114), corresponding to slot spring mechanisms 414-1, 414-2. Furthermore, the slot spring mechanisms 1114 are joined by connecting slots 1116-1, 1116-2 (e.g., connecting slots 1116 and/or a connecting slot 1116) corresponding to connecting slots 416-1, 416-2. A region within the slot spring mechanisms 1114 and connecting slots 1116 are understood to form a laterally displaceable region within which the light-modulator-mounting position 1103 is contained (e.g., similar to the region 498).

The portion 1102 further comprises a second pair of slot spring mechanisms 1118-1, 1118-2 (e.g., slot spring mechanisms 1118 and/or a slot spring mechanism 1118), corresponding to slot spring mechanisms 418-1, 418-2. The slot spring mechanisms 1118 are joined by connecting slots 1120-1, 1120-2 (e.g., connecting slots 1120 and/or a connecting slot 1120) corresponding to connecting slots 420-1, 420-2. A region within the slot spring mechanisms 1120 and connecting slots 1120 are understood to form a respective laterally displaceable region within which the light-modulator-mounting position 1103 is contained (e.g., similar to the region 499). Indeed, the laterally displaceable region formed by the slot spring mechanisms 1120 and connecting slots 1120 is understood to be nested within the laterally displaceable region formed by the slot spring mechanisms 1114 and connecting slots 1116.

Hence, in this example, the second slot spring mechanisms 1118 and associated connecting slots 1120 are nested inside the first slot spring mechanisms 1114 and associated connecting slots 1116 (e.g., as compared to the first slot spring mechanisms 414 and associated connecting slots 416 nested inside the second slot spring mechanisms 418 and associated connecting slots 420).

Nested inside the portion 1102 (e.g., inside a dashed line 1130) is a rotatable area 1131 comprising slots 1132, 1133. The slots 1132, 1133 extends partially around the light-modulator-mounting position 1103, and are shaped to define the rotational area 1131 within which the light-modulator-mounting position 1103 is contained. The slot 1132 is generally C-shaped with angled ends 1134 of the C-shape at least partially angled inwards (and towards each other) relative to a remainder of portions of the slot 1132 that connect to the angled ends 1134 of the C-shape. The rotational area 1131 is understood to be contained with both laterally displaceable regions formed by the slot spring mechanisms 1114, 1118 and respective connecting slots 1116, 1120.

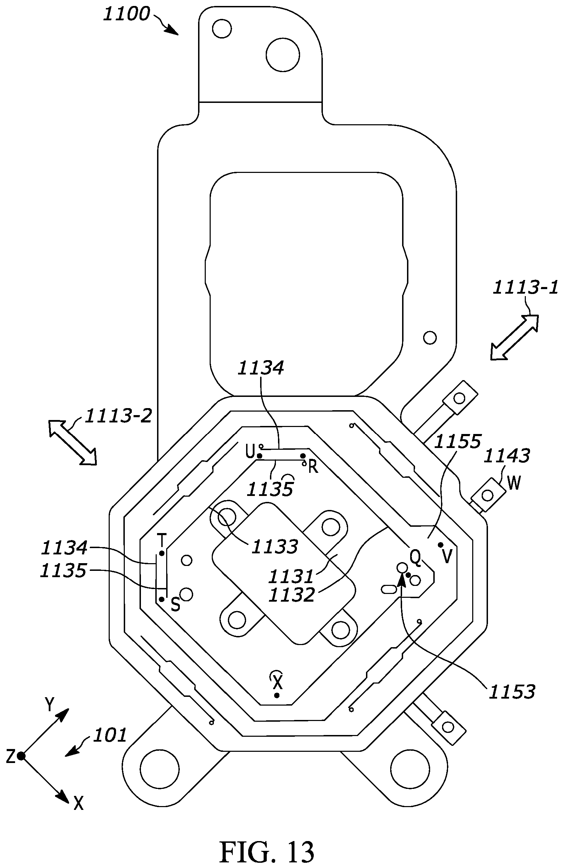

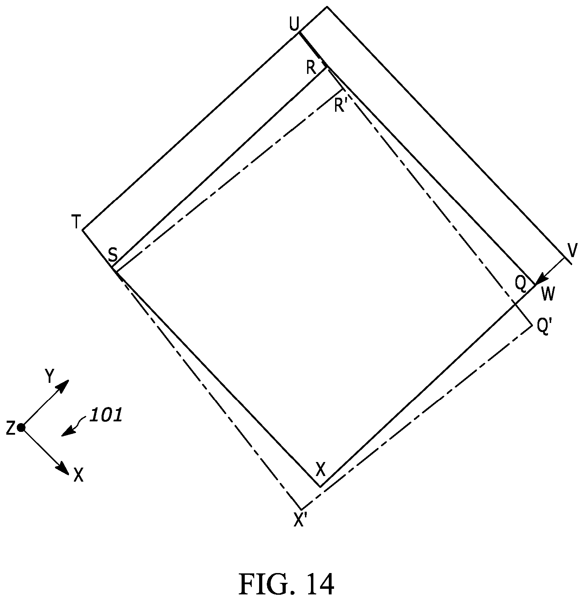

The slot 1133 includes angled ends 1135 that are at least partially angled inwards relative to a remainder the slot 1133. The slot 1133 is further recessed inside the open end of the C-shape of the slot 1132, with angled ends 1135 of the slot 1133 adjacent to, and inside, respective angled ends 1134 of the slot 1132. Regions between the angled ends 1133, 1134 of the slots 1132, 1133 connect the rotatable area 1131 to the portion 1102. Operation of the rotatable area 1131 is described with respect to FIG. 13 and FIG. 14. Furthermore, in general, the angled ends 1134, 1135 may be angled about 45° from a respective portion of the slots 1131, 1133 to which they are connected. Indeed, the slots 1131, 1133 may generally form an octagonal shape similar to the octagonal shape of the plate of the single component convergence mechanism 1100, though portions of the slots 1131, 1133 where angles occur may be shorter than other portions of the slots 1131, 1133.

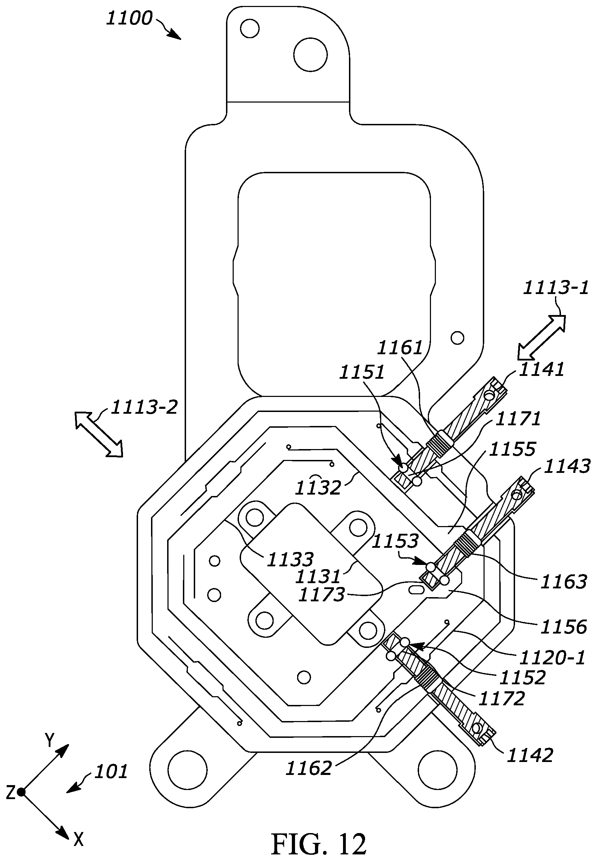

As depicted, the single component convergence mechanism 1100 further comprises first and second adjustment mechanisms 1141, 1142 comprising threaded adjustment screws similar to the threaded adjustment screws of the adjustment mechanisms 451, 452. However, with reference to FIG. 12, which depicts the single component convergence mechanism 1100, with regions where the threaded adjustment screws attach to the plate of the single component convergence mechanism 1100 cutaway, respective ends of the threaded adjustment screws are mated to the region formed by the slot spring mechanisms 1114, 1118 and the connecting slots 1116, 1120, adjacent a respective slot spring mechanism 1114, 1118, via one or more respective pins 1151, 1152 and/or, as depicted, pairs of respective pins 1151, 1152. While one pin 1151, 1152 could be used, a pair of respective pins 1151, 1152 is more efficient and less prone to slippage. The pins 1151, 1152 are understood to downwards from a plate of the single component convergence mechanism 1100, and/or in the Z-direction from a side opposite where a light modulator is mounted at the light modulator-mounting position 1103

Hence, the respective slot spring mechanisms 1114, are movable via push or pull movement via respective ends of the threaded adjustment screws. Put another way, rather than apply pressure and/or force directly at a slot of the slot spring mechanism 1114, 1118, the threaded adjustment screws apply pressure and/or force via the pins 1151, 1152.

In general, the threaded adjustment screws of the adjustment mechanisms 1141, 1142 are understood to be attached to the plate of the single component convergence mechanism 1100 via respective pins 1151, 1152, and threaded into threaded holes 1161, 1162 at an underside of the single component convergence mechanism 1100 such that the threaded adjustment screws of the adjustment mechanisms 1141, 1142 may be turned to move in respective movement directions 1113 (e.g., parallel to the plate of the single component convergence mechanism 1100), such as X or Y movement directions.

The ends of the threaded adjustment screws (e.g., opposite heads of the threaded adjustment screws) attach to the plate of the single component convergence mechanism 1100 via the respective pins 1151, 1152. In particular, the ends of the threaded adjustment screws comprise respective grooves 1171, 1172 which fit within the respective pins 1151, 1152. As such, when a threaded adjustment screw is turned (e.g., by hand and/or via a screw driver and/or Allen key that mates with a head of the threaded adjustment screw) the threaded adjustment screw moves along a movement direction 1113 (e.g., inwards or outwards relative to the slot spring mechanisms 1114, 1118), and the grooves 1171, 1172 exert a force on respective pins 1151, 1152 (e.g., as the grooves 1171, 1172 turn within the respective pins 1151, 1152), which may be according to push or pull movement, depending on a direction in which a threaded adjustment screw is turned. This force is translated to a respective slot spring mechanism 1114, 1118 via the plate of the single component convergence mechanism 1100, thereby applying pressure and/or force to the respective slot spring mechanism 1114, 1118, and distorting the plate of the single component convergence mechanism 1100. Such distortion is similar to as described with respect to FIG. 6 and FIG. 8.

As depicted, the single component convergence mechanism 1100 further comprises a third adjustment mechanism 1143 used to rotate the rotatable area 1131. As depicted in FIG. 11 and FIG. 12, the third adjustment mechanism 1143 is similar to the adjustment mechanisms 1141, 1142, and comprises a respective threaded adjustment screw, a respective pair of pins 1153, a respective threaded hole 1163 and a respective groove 1173 of the threaded adjustment screw that fits between the pair of pins 1153. In this instance, however, an end of the threaded adjustment screw is positioned off-center from the rotatable area 1131, the end of the threaded adjustment screw configured to rotate the rotatable area 1131 when the threaded adjustment screw is turned, for example in the threaded hole 1163.

In particular, the threaded hole 1163 is understood to be between the connecting slot 1120-1 and the slot 1132 that defines the rotatable area 1131, and the end of the threaded adjustment screw attaches to the rotatable area 1153 at a corner thereof (e.g., off-center).

As depicted, the connecting slot 1120-1 is shaped to allow space for the threaded hole 1163 in a region 1155 between the slots 1120-1, 1132, and the slot 1132 is shaped to allow space for the pins 1153 in a region 1156 in a corner of the rotatable area 1131 opposite the slot 1133.

Rotational adjustment of the rotational area 1131 is next described in more detail with respect to FIG. 13 and FIG. 14. Furthermore certain points and/or components on the single component convergence mechanism 1100 are labelled "Q", "R", "S", "T", "U", "V", "W", "X" in both FIG. 13 and FIG. 14 for easy reference.

In particular the point "Q" is located between the pins 1153.

The point "R" is located between angled ends 1134, 1135 of the slots 1132, 1133 that are closest to the pins 1153, and at a region of the angled ends 1134, 1135 closest to an interior of the rotatable area 1131.

The point "U" is also located between angled ends 1134, 1135 of the slots 1132, 1133 that are closest to the pins 1153, and at a region of the angled ends 1134, 1135 closest to the portion 1102. Indeed, the points "R" and "U" form a first beam "R-U" that joins the rotatable region 1131 to the portion 1102.

The point "S" is located between angled ends 1134, 1135 of the slots 1132, 1133 that are furthest from the pins 1153 (e.g., at a corner of the rotatable region 1131 diagonally opposite the pins 1153), and at a region of the angled ends 1134, 1135 closest to an interior of the rotatable area 1131.

The point "T" is also located between angled ends 1134, 1135 of the slots 1132, 1133 that are furthest from the pins 1153 (e.g., at a corner of the rotatable region 1131 diagonally opposite the pins 1153), and at a region of the angled ends 1134, 1135 closest to the portion 1102. Indeed, the points "S" and "T" form a second beam "S-T" that also joins the rotatable region 1131 to the portion 1102. Indeed the beams "R-U", "S-T" both join the rotatable region 1131 to the portion 1102, but at adjacent corners of the rotatable region 1131.

The point "V" is located in the region 1155 between the slots 1120-1, 1132, where the threaded hole 1163 is located. It is understood that the points "U", "V" form a beam "U-V".

The point "W" represents a head of the threaded adjustment screw of the adjustment mechanism 1143; hereafter the point "W" is interchangeably referred to as the screw "W".

The point "X" is located at a corner of the rotatable area 1131 diagonally across from the location of the beam "R-U".

With reference to FIG. 14, when the threaded adjustment screw represented by the point "W" is turned, force is applied at the point "Q" which rotates the beam "U-V" causing distortion to the slots 1132, 1133 which, in turn, rotates the beams "S-T", "U-R" respectively around points "S", "U". The corner where the point "X" is located also moves.

This distortion is best seen in FIG. 14, with respect to the broken lines, where solid lines in FIG. 14 show rest positions of points, and the broken lines show positions of the solid lines when distorted when the screw "W" applies a force to the point "Q". Indeed, at FIG. 14, positions of points "R", "Q" and "X" after distortion are respectively labelled as points "R'", "Q'" and "X"'.

The cross sections of beams "S-T" and "U-R" may also be reduced in cross sectional area with respect to other areas of the plate of the single component convergence mechanism 1100 (e.g., by about 40%), to ensure that the distortion takes place at these locations, creating a relative position change between points "T-U-V", "Q-R-S". The cross sections of beams "S-T" and "U-R" are selected to allow hand tightening of the screw "W", allowing the rotational area 1131 be distorted elastically and return to its original position when the screw force is backed off. The width of the slots 1132, 1133 is selected such that when the screw "W" is turned, the slot widths will bottom out (e.g., touch each other) before the material of the single component convergence mechanism 1100 (e.g., stainless steel) plastically deforms, ensuring that the total adjustment range is in the elastic region of the material. The cross sections of beams "S-T" and "U-R" may also be sized to resist distortion when other residual ambient forces are applied to the mechanism (normal handling, vibrations from motors and fans in proximity, external environmental vibrations...).

Furthermore the slots of the single component convergence mechanism 1100 may be in a range of about 0.2 mm wide to about 0.4 mm wide. Indeed, about 0.4 mm may be a maximum width in some examples. In particular, testing of a prototype of the single component convergence mechanism 1100 having dimensions of about 75 mm by 75 mm (e.g., of a region that includes the slot groups 1110) and made from 17-4ph stainless steel, with a thickness of about 6.35mm showed that, below about 0.4 mm, deformation of the spring mechanisms of the slot spring mechanisms 1114, 1118 was elastic (e.g., the spring mechanisms of the slot spring mechanisms 1114, 1118 returned to an original position when force was removed); and, above about 0.4 mm, deformation of the spring mechanisms of the slot spring mechanisms 1114, 1118 was plastic (e.g., the spring mechanisms of the slot spring mechanisms 1114, 1118 did not return to an original position when force was removed).

Furthermore, at the successful prototype, beam structures of the spring mechanisms were about 30 mm long (e.g., between outer ends of the pair of end portions of the slot spring mechanisms 1114, 1118). Furthermore, the beams structures of the spring mechanisms of the slot spring mechanisms 1114, 1118 may be about 0.2 inches wide (e.g., about 5 mm) at the center of the slot spring mechanisms 1114, 1118 and about 0.8 wide between the end portions of the slot spring mechanisms 1114, 1118 and between the outer ends of the end portions of the slot spring mechanisms 1114, 1118. As such a cross-section of the wider portions of the beam structures may be about 0.25" (6.35 mm) x about 0.2" (5.1 mm) in a center region thereof, and a cross-section of the narrower portions of the beam structures may be about 0.25" (6.35 mm) x about 0.08" (e.g., 2mm) at end regions thereof. Such a combination of widths using stainless steel may provide sufficient stiffness in the Z-direction while allowing flexibility in the X-direction and the Y-direction at least within the narrower sections of the beam structure. Hence, in general, the narrower areas may be about 40% of the wider areas of the beam structure. However, selection of such cross sectional areas may occur heuristically and may include any suitable dimensions.

Similarly, cross sections of beams "S-T" and "U-R" may be reduced in a similar manner.

Hence the thickness of the plate of the single component convergence mechanism 1100, as well as other dimensions of the single component convergence mechanism 1100 may be selected heuristically to ensure a certain amount of elastic deformation of the spring mechanisms 1115, 1119 of the slot spring mechanisms 1114, 1118. Indeed, the dimensions of the single component convergence mechanism 1100 are further selected to accommodate a spatial light modulator, such as a DMD, at the light modulator mounting position 1103. In some examples, a plate of the single component convergence mechanism 1100 may be thinner in a region of the light-modulator-mounting position 1103 such that a spatial light modulator mounted at the light-modulator-mounting position 1103 is recessed from a remainder of the components of the single component convergence mechanism 1100.

While any of the single component convergence mechanisms 100, 400, 1000, 1100 described herein may be used in a projector, the component convergence mechanisms 1100 may be the most compact while also providing rotational functionality.

Furthermore, while threaded adjustment screws have been described with respect to adjustment mechanisms described herein, the adjustment mechanisms may comprise any suitable devices for applying pressure and/or force as described herein, including, but not limited to, pistons, and the like.

Furthermore, aspects of the single component convergence mechanisms 100, 400, 1000, 1100 may be combined where suitable. For example the single component convergence mechanism 1100 may be adapted to include the adjustment mechanism 451 and spring mechanism 455 of the single component convergence mechanism 400, and the like.

Put another way, while certain features have been described with respect to certain single component convergence mechanisms 100, 400, 1000, 1100, features of any of the single component convergence mechanisms 100, 400, 1000, 1100 may be combined where suitable.

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that there are yet more alternative examples and modifications possible, and that the above examples are only illustrations of one or more examples. The scope, therefore, is only to be limited by the claims appended hereto.

## Claims

1. A device (1110) comprising:
a plate (1102);
a light-modulator-mounting position (1103) at the plate (1102);
a pair of slot spring mechanisms (1114) in the plate (1102), the pair of slot spring mechanisms (1114) on opposite sides of the light-modulator-mounting position (1103);
a pair of connecting slots (1116) in the plate (1102) joining the pair of slot spring mechanisms (1114); and
a region (1130) formed by the pair of slot spring mechanisms (1114) and the pair of connecting slots (1116) that is laterally displaceable within the plate (1102) via force applied to a spring mechanism of the pair of slot spring mechanisms (1114), the light-modulator-mounting position (1103) located at the region (1130),
the pair of slot spring mechanisms (1114) connected to the region (1130) to a remainder of the plate (1102).

2. The device (1100) of claim 1, wherein respective parallel portions of the pair of connecting slots (1116) are about parallel to a movement direction of the region.

3. The device (1100) of claim 2, wherein connecting portions of the pair of connecting slots (1116) connect respective parallel portions to the pair of slot spring mechanisms (1114).

4. The device (1100) of any one of claim 1 to claim 3, wherein the pair of slot spring mechanisms (1114) respectively comprise:
an outer slot; and
an inner slot,
wherein outer slots of the pair of slot spring mechanisms (1114) are joined via a first connecting slot of the pair of connecting slots (1116), and inner slots of the pair of slot spring mechanisms (1114) are joined via a second connecting slot of the pair of connecting slots (1116).

5. The device (1100) of claim 4, wherein the pair of slot spring mechanisms (1114) are connected, to the region at first respective ends, and the pair of slot spring mechanisms (1114) are connected to the remainder of the plate (1102) at second respective ends opposite the first respective ends.

6. The device (1100) any one of claim 1 to claim 5, wherein the pair of slot spring mechanisms (1114) respectively comprise an outer slot and an inner slot, wherein a distance between the outer slot and the inner slot is greater at respective center portions than at respective end portions.

7. The device (1100) of claim 6, wherein each of the outer slot and the inner slot comprises respective joining portions joining the respective center portions to the respective center portions.

8. The device (1100) any one of claim 1 to claim 7, further comprising:
a first slot group comprising the pair of slot spring mechanisms (1114) and the pair of connecting slots (1116); and
a second slot group nested inside the first slot group, the second slot group rotated by 90° relative to the first slot group, the second slot group comprising:
a second pair of slot spring mechanisms (1114) on respective opposite sides of the light-modulator-mounting position (1103); and
a second pair of connecting slots (1116) in the plate (1102) joining the second pair of slot spring mechanisms (1114), the second pair of slot spring mechanisms (1114) connected, at respective second inner sides, to the region, and connected, at second respective outer sides, to a respective remainder of the plate (1102),
wherein the region is within both the first slot group and the second slot group,
wherein the region is laterally displaceable within the plate (1102) in a first direction via force applied to the spring mechanism of the pair of slot spring mechanisms (1114), and the region is laterally displaceable within the plate (1102) in a second direction perpendicular to the first direction, via respective force applied to a respective spring mechanism of the second pair of slot spring mechanisms (1114).

9. The device (1100) any one of claim 1 to claim 8, wherein the pair of slot spring mechanisms (1114) are biased to a rest position.

10. The device (1100) any one of claim 1 to claim 9, further comprising an adjustment mechanism configured to move, or apply force to, one slot spring mechanism, of the pair of slot spring mechanisms (1114), to laterally displace the region within the plate (1102) in a movement direction.

11. The device (1100) of claim 10, wherein the adjustment mechanism comprises a threaded adjustment screw, wherein an end of the threaded adjustment screw is mated to the region, adjacent the one slot spring mechanism, of the pair of slot spring mechanisms (1114), via one or more pins, such that the one slot spring mechanism, of the pair of slot spring mechanisms (1114) is movable via push or pull movement via the end of the threaded adjustment screw.

12. The device (1100) any one of claim 1 to claim 11, further comprising:
a rotatable area comprising one or more slots nested inside the pair of slot spring mechanisms (1114) and the pair of slot spring mechanisms (1114), the region comprising the rotatable area, and the light-modulator-mounting position (1103) being inside the rotatable area; and
a threaded adjustment screw, wherein an end of the threaded adjustment screw is positioned off-center from the rotatable area, the end of the threaded adjustment screw configured to rotate the rotatable area when the threaded adjustment screw is turned.

13. The device (1100) of claim 12, wherein the end of the threaded adjustment screw is mated to the rotatable area via one or more pins, such that the rotatable area is rotatable via push or pull movement via the end of the threaded adjustment screw.

14. The device (1100) any one of claim 1 to claim 13, wherein the plate (1102) comprises regions of reduced cross-sectional area located at locations joining the slot spring mechanisms and the pair of connecting slots (1116).
